# EUROPEAN PATENT APPLICATION

(11) **EP 3 815 959 A1**
(43) Date of publication of application: **05.05.2021**
(21) Application number: 20205081.1
(22) Date of filing: 31.10.2020
(51) Int. Cl.: B60L 58/20, B60L 58/14, B60L 58/25, B60L 58/26, B60L 58/27

(54) **BATTERY ARRANGEMENT FOR ELECTRICAL VEHICLES**

(30) Priority: 31.10.2019 NL 2024140
(71) Applicant: INND B.V., 2153 PJ Nieuw-Vennep (NL)
(72) Inventor: van de Ven, Bjorn, 2153PJ Nieuw-Vennep (NL)
(74) Representative: van der Maarl, Arjan

(57) **Abstract**

Electrical vehicles are equipped with battery packs to provide energy to the electrical motor of the electrical vehicle, as well as to auxiliary functionalities containing an electrical actuator requiring energy for its operation. A disadvantage of the current electrical vehicles is that they are either limited in performance or in range. Both are improved with a battery system according to the invention. A battery system (100) comprising: a fixed battery pack (110) arranged for electrically powering a propulsion system of an electrical vehicle, and comprising a set of terminals (111, 112) for electrically connecting the fixed battery pack; a battery bay (120, 130) having an electrical connector for receiving and connecting to a removable battery pack comprising a set of terminals (121, 122, 131, 132) for electrically connecting the removable battery pack; an electrical adapter (140) arranged for electrically connecting the removable battery pack and the fixed battery pack via the respective terminals; and a system controller (150) arranged for the steps of: obtaining (210) a fixed state indicator based on a state of charge of the fixed battery pack and/or a terminal voltage of the fixed battery pack; receiving (220) a presence indicator indicating presence of a removable battery pack in the battery bay; obtaining (230) a removable state indicator based on a state of charge of the removable battery pack and/or a terminal voltage of the removable battery pack; determining (240) if charge of the removable battery pack is to be provided to the fixed battery pack and/or the propulsion system based on the fixed state indicator and/or the removable state indicator; and controlling (250) the electrical adapter to transfer charge from the removable battery pack to the fixed battery pack and/or the propulsion system, wherein the current from the removable battery pack is lower than the peak current required for the propulsion system.

## Description

### FIELD OF THE INVENTION

The invention relates to the field of battery systems for electrical vehicles.

### BACKGROUND OF THE INVENTION

Electrical vehicles are equipped with battery packs to provide energy to the electrical motor of the electrical vehicle, as well as to auxiliary functionalities containing an electrical actuator requiring energy for its operation. These battery packs are based on Li-ion cells that can have different chemistries. Each chemistry has its advantages and disadvantages. Batteries may be typed as energy dense or power dense.

Energy dense means that the battery has a relatively high energy density or high capacity per volume. These batteries are typically used in application areas requiring an electrical vehicle to travel a long distance without recharge. These batteries typically have the disadvantage that the life time is shortened if high power is drawn from these batteries, or these batteries are just not capable to deliver these high powers.

Power dense means that the battery has a relatively high-power density, and thus can deliver a lot of energy in a short amount of time. These batteries are typically used in application areas requiring an electrical vehicle to accelerate to high speeds in a limited amount of time. These batteries typically have the disadvantage that the batteries require a considerable amount of space more compared to the energy dense batteries, while this space is often not available in the electrical vehicle. Another disadvantage of these batteries is that they have a lower energy density. Another disadvantage of these batteries is that they often need cooling and heavy cabling making the batteries most of the time not portable.

Many EV application areas require both of these characteristics, recent developments are focussed on finding a suitable chemistry to mitigate these disadvantages

### SUMMARY OF THE INVENTION

An object of the invention is to mitigate the disadvantages as mentioned above.

According to a first aspect of the invention, a battery system for electrically powering a propulsion system of an electrical vehicle, comprising: a fixed battery pack arranged for electrically powering a propulsion system of an electrical vehicle, and comprising a set of terminals for electrically connecting the fixed battery pack; a removable battery pack comprising a set of terminals for electrically connecting the removable battery pack; a battery bay having an electrical connector for receiving and connecting to the removable battery pack; an electrical adapter arranged for electrically connecting the removable battery pack and the fixed battery pack via the respective terminals; and a system controller arranged for the steps of: obtaining a fixed state indicator based on a state of charge of the fixed battery pack and/or a terminal voltage of the fixed battery pack; receiving a presence indicator indicating presence of a removable battery pack in the battery bay; obtaining a removable state indicator based on a state of charge of the removable battery pack and/or a terminal voltage of the removable battery pack; determining if charge of the removable battery pack is to be provided to the fixed battery pack and/or the propulsion system based on the fixed state indicator and/or the removable state indicator; and controlling the electrical adapter to transfer charge from the removable battery pack to the fixed battery pack and/or the propulsion system, wherein the current from the removable battery pack is lower, preferably significantly, lower than the peak current required for the propulsion system.

An electrical vehicle comprises a battery system. The electrical vehicle has also a propulsion system comprising an electrical motor converting electrical energy in a mechanical force exerted on e.g. the wheels of the electrical vehicle for moving or accelerating the electrical vehicle. As another example, the electrical energy may be used to turn the propeller of a ship.

The fixed battery pack may supply the electrical energy to the propulsion system. Furthermore, if present, the removable battery pack may supply the electrical energy via the electrical adapter to the fixed battery pack and/or the propulsion system.

The battery system, when applied to an electrical vehicle, provides the electrical vehicle with advantages and allows the system controller to extend the service life of the battery system, specifically the removable battery pack and/or the fixed battery pack.

The fixed battery pack acts as a charge buffer, typically a high-power charge buffer, between the removable battery pack, typically a removable high-energy battery pack, and the propulsion system. The battery system is advantageously capable of supplying high power bursts of energy. The fixed battery pack will provide the propulsion system with at least part, preferable the larger part, more preferably almost all, of the peak current required by the propulsion system at specific moments in time. Depending on the application, the peak current is typically much higher compared to the current required for the propulsion system during constant operation. As an example, an electrical car may accelerate several times in a city away from road crossings. These accelerations require high peak currents, which are typically substantially higher than the continuous current required for driving at a continuous speed. The continuous current may be defined as an average current over a substantial amount of time, such as seconds or even minutes or hours.

The removable battery pack is discharged at a maximum current, which is at least lower than the peak current required for the propulsion system. In a preferred embodiment, the discharge current is substantially lower than the peak current required for the propulsion system. In a further preferred embodiment, the discharge current is 80%, preferably 75%, more preferably 70%, even more preferably 60%, even more preferably 40%, most preferably 20% of the peak current required for the propulsion system.

In a preferred embodiment, the removable battery pack is discharged with a current above the continuous current drawn from the battery system, such as a discharge current of 25%, preferably 20%, more preferably 10%, most preferably 5% higher than the continuous current. The ratio between the continuous current and the discharge current may be a design parameter of the system, which may depend on the selection of cells, selection of chemistry of the cells and/or battery pack size.

The charge transfer may be considered as an energy transfer or energy flow from one location to another. If charge is stored, typically temporarily, in for example a battery pack, the battery pack may be considered as a charge storage or an energy storage.

The relatively low and continuous discharge current of the removable battery pack has the technical effect of extending the service life of the removable battery pack. At the same time, the battery system as a whole provides e.g. an electrical vehicle with the necessary electrical energy for allowing high-performance capabilities as well as long duration capabilities. Furthermore, a relatively low and continuous discharge decreases the temperature build up in the removable battery pack and thus increases safety. Furthermore, a relatively low and continuous discharge decreases the temperature build up in the removable battery pack and thus increases performance of the removable battery pack and thus the battery system as a whole. Furthermore, a relatively low and continuous discharge decreases the temperature build up in the removable battery pack and thus makes a temperature control unit, specifically cooling, superfluous for the removable battery pack. This simplifies the removable battery pack having the technical effect making the removable battery pack lighter and more easily removable and/or replaceable.

The fixed battery pack acting as buffer should be dimensioned correctly for the application of the electrical vehicle. As an example, the electrical vehicle may be required to accelerate from still standing to top-speed a number of times within a specific time period. The fixed battery pack should be able to at least hold the charge to facilitate this requirement. The dimensioning of the battery pack is typically dependent on the performance requirements set for the electrical vehicle.

As the fixed battery pack typically acts as a charge buffer, the fixed battery pack discharge may alternate between a charge mode and a discharge mode depending on the required electrical energy by the electrical vehicle. Alternating the mode of a battery may be caused by applying a particular voltage to the terminals of the battery. Typical battery modes are defined as a discharge mode, a stationary mode and/or charge mode. During that the fixed battery pack ceases to discharge, the fixed battery pack may have time to disperse thermal energy build up in the battery pack having the technical effect of extending the service life of the fixed battery pack. Furthermore, the fixed battery pack may be charged immediately via the electrical adapter with energy from the removable battery pack restoring the state of charge of the fixed battery pack to a level causing the technical effect of an extension of the service life of the fixed battery pack. Furthermore, charging the fixed battery pack immediately has the technical effect of availability of more energy for a next high-power operation.

Furthermore, for example, during periods of time the peak current is drawn by the propulsion system, the peak current is provided by the fixed battery pack supplemented by the removable battery pack. Thus, the peak current of the fixed battery pack is lowered due to the parallelism of the fixed battery pack and the removable battery pack. And not only during peak current conditions, but also when a current is drawn by the propulsion system higher than the continuous current drawn from the removable battery pack, the current from the removable battery pack supplements the current from the fixed battery pack causing the discharge of the fixed battery pack to be reduced. The reduced discharge rate of the fixed battery pack has the technical effect of enabling a higher peak power and/or extending the service life of the fixed battery pack due to the decreased thermal energy build up.

In an alternative embodiment, the system may still be configured such that the peak current is provided by the fixed battery pack supplemented by the removable battery pack. The difference is that the fixed battery pack may be dimensioned such that the fixed battery pack provides its peak current during that the peak current is drawn by the propulsion system. By supplementing the peak current with the continuous discharge current from the removable battery pack, a fixed battery pack with a lower peak current may advantageously be utilised for providing higher performance capabilities to the electrical vehicle.

Furthermore, the removable battery pack may be easily swapped. The swapping allows for almost advantageously instantaneously charging of the electrical vehicle. Furthermore, the removable battery pack provides the advantage of ease of replacing depleted or failed removable battery packs that do not function according to the specifications anymore. Furthermore, the removable battery pack may be easily replaced by another removable battery pack having improved specifications as science advances. Furthermore, by replacing the removable battery pack the battery system is advantageously able to quickly be able to again provide the electrical vehicle with electrical energy, thus improving the performance of the system while the removable battery pack may be used less due to replacing for extending the lifetime of the battery system. Furthermore, replacing the removable battery system advantageously allows to not fully discharge the fixed battery pack such that the lifetime of the fixed battery pack and thus also of the battery system as a whole is extended. Furthermore, by replacing the removable battery pack, the downtime of the battery system for charging is advantageously minimized. Furthermore, the combination of a fixed battery pack having electrically energy left, while the removable battery pack is removed advantageously allows the electrical vehicle to be able to receive electrical energy while the removable battery pack is temporarily removed during swapping. Furthermore, replacing the removable battery pack allows for a battery system without a charger unit present or if the charger unit is defective, advantageously still allow the battery system to function. Furthermore, if the removable battery pack is charged externally, the removable battery may be advantageously simplified as the charging may be done by a normal or typical wall socket connected to the mains without special connectors and/or specific electrical supply requirements via a typical external charger. Furthermore, the removable battery pack advantageously allows for different removable battery packs having different capacity and/or different amount of energy storage for advantageously providing the battery system with the requested capacity and/or energy.

In an embodiment of the battery system, the removable battery pack is a portable battery pack. The portable battery pack advantageously allows quick swapping of the removable battery pack by hand. No infrastructure is necessary for swapping, such as a crane for lifting the removable battery pack.

A portable battery pack is a battery pack having a weight that may be handled or carried by a typical person. The portable battery pack typically has a handle or gripping part for simplifying handling of the portable battery pack. The portable battery pack has a preferable weight below 25 kg, preferably below 20 kg, more preferably below 18 kg most preferably below 15 kg, typically in a range around 11 kg.

In an embodiment of the battery system, the fixed battery pack is arranged for providing high power to the propulsion system. The fixed battery pack typically directly connected to the propulsion system or at least more directly coupled to the propulsion system relative to the removable battery pack, which is connected via the electrical adapter. The fixed battery pack is thus advantageously better situated compared to the removable battery pack to deliver high power to the propulsion system. Furthermore, the fixed battery pack, as it is fixed in the system, can advantageously be more easily fitted with electrical cables suitable for carrying higher currents. Cables suitable for higher currents are typically cables having a larger diameter. Furthermore, the fixed battery pack, as it is fixed in the system, can advantageously be more easily fitted with a thermal control system.

In an embodiment of the battery system, the battery bay is arranged for receiving the removable battery pack having a high energy density. The battery bay may be equipped with electrical cables having a smaller diameter as the current for the high energy density removable battery packs is typically not that high. Furthermore, the electrical connector for receiving and connecting to a removable battery pack may advantageously be fitted with a simpler and lighter connector. Connectors are a typical issue in an electrical circuit suitable for carrying high currents.

In an embodiment of the battery system, the fixed battery pack is arranged for providing high power to the propulsion system and the battery bay is arranged for receiving the removable battery pack having a high energy density. The combination provides the advantage of a simple and lighter connector and cabling for the battery bay, while the cabling for the fixed battery pack is easily provided as suitable for high currents.

The energy density and the maximum power are a typical parameter for selecting a battery. The energy density is the amount of energy stored in a battery pack per unit volume. Typically, a high energy density has the disadvantage of creating a high internal impedance. The maximum power is the maximum amount of power that the battery may output at any given moment in time. The maximum power is typically limited by the battery delivering the power warming up. This warming up is due to the delivered current running through the internal impedance. Current technology shows that high energy density and high maximum power are mutually exclusive requirements for a battery, and thus a trade-off is always present when selecting one cell type.

In a further embodiment of the battery system, the fixed battery pack has a first energy density and the battery bay is arranged for receiving the removable battery pack having a second energy density, wherein the first energy density is lower compared to the second energy density, and preferably the first power density is higher compared to the second power density. This embodiment advantageously details the energy density parameter of the fixed battery pack and the ability of the battery bay and thus indirectly of the removable battery pack relative to each other.

In a further embodiment of the battery system, the fixed battery pack is capable of providing a fixed battery pack maximum power and the battery bay is arranged for receiving the removable battery pack capable of providing a removable battery pack maximum power, wherein the fixed battery pack maximum power is higher compared to the removable battery pack maximum power. This embodiment advantageously details the maximum power parameter of the fixed battery pack and the ability of the battery bay and thus indirectly of the removable battery pack relative to each other.

In an embodiment of the battery system, the removable battery pack is arranged in the battery bay. The operational battery system typically comprises the removable battery pack for providing energy to the propulsion system and/or the fixed battery pack during operation. The battery system may comprise multiple battery bays, wherein one or more of these multiple battery bays may be taken by a removable battery pack placed in the battery bay. As an example, the operational battery system may comprise e.g. two battery bays. The battery system may comprise one or two removable battery packs, wherein the presence of one or two removable battery packs does advantageously only influence the amount of energy or charge provided, but does not influence the top performance or peak current of the battery system.

The terminal voltage may be used as indicator of the state of charge of a battery pack, such as the fixed battery pack and/or the removable battery pack. Typically, compensation algorithms are in place to compensate for any current flowing through the battery pack during the measurement. The amount of charge going into and out of a battery pack may be counted, such as integrating the current overtime. This measurement typically has the disadvantage that the offset integrates overtime as well causing large errors over time. A combination of the two measurements may advantageously be applied in an algorithm. Further parameters which may be taken into account for determining the state of charge of a battery pack may be the battery pack internal impedance and the temperature of the battery pack, specifically at a specific load.

In an embodiment of the battery system, the battery system comprises a fixed state unit arranged for determining the fixed state indicator, and wherein the step of obtaining the fixed state indicator comprises receiving the state indicator from the fixed state unit. The system controller may require the fixed state indicator. The fixed state indicator represents the state of charge of the fixed battery pack. The fixed state unit may be a separate sensor or processor, alternatively, the fixed state unit may be in whole or partly a software program executed on a processor also running the software for the system controller.

In a further embodiment of the battery system, the fixed state unit is arranged for measuring the terminal voltage of the fixed battery pack and/or measuring the charge exchanged with the fixed battery pack.

In a further embodiment of the battery system, the fixed state unit comprises a memory, wherein the fixed state unit is arranged for: retrieving a previous fixed state indicator from the memory; calculating a current fixed state indicator based on the previous fixed state indicator and the measurement. The memory allows advantageously to integrated and/or to differentiate relative to a previous state of charge indicator.

In an embodiment of the battery system, the battery system comprises a removable state unit arranged for determining the removable state indicator, and wherein the step of obtaining the removable state indicator comprises receiving the state indicator from the removable state unit.

The system controller may require the removable state indicator. The removable state unit may be part of the removable battery pack, the battery bay or the battery system. The removable state indicator represents the state of charge of the removable battery pack present in a battery bay. The removable state unit may be a separate sensor or processor, alternatively, the removable state unit may be in whole or partly a software program executed on a processor also running the software for the system controller.

In a further embodiment of the battery system, the removable state unit is arranged for measuring the terminal voltage of the removable battery pack and/or measuring the charge exchanged with the removable battery pack.

In a further embodiment of the battery system, the removable state unit comprises a memory, wherein the removable state unit is arranged for: retrieving a previous removable state indicator from the memory; calculating a current removable state indicator based on the previous removable state indicator and the measurement. The memory may allow advantageously to integrated and/or to differentiate relative to a previous state of charge indicator.

In an embodiment of the battery system, the battery system comprises: a charger connector for connecting to an external charge supply; a charger arranged for electrically connecting the charger connector and the removable battery pack and/or the electrical adapter; a fixed temperature sensor arranged for sensing the temperature of the fixed battery pack; a fixed temperature control unit for controlling the temperature of the fixed battery pack; and wherein the system controller is also arranged for the steps of: receiving an external charger presence indicator indicating presence of an external charge supply plugged into the connector; receiving a fixed temperature measurement from the fixed temperature sensor; if the fixed temperature measurement is outside the fixed charge temperature range, controlling the fixed temperature control unit for adjusting the fixed temperature towards the fixed charge temperature range; and if the fixed temperature measurement is inside the fixed charge temperature range, controlling charging the fixed battery pack via the charger and/or the electrical adapter.

The battery system may be charged almost instantaneously by replacing or placing a removable battery pack in a battery bay. Alternatively, if the electrical vehicle comprising the battery system is not used over a longer period of time, the battery system may advantageously be charged over a longer period of time providing higher efficiency of charging and typically lower cost and requirements to the charger. The charger may advantageously be incorporated in the battery system, such that the removable battery pack does not have to be always swapped. Alternatively, the charger may advantageously be used to charge the fixed battery pack, even in the absence of a removable battery pack. In combination with electrical circuits able to isolate the removable battery packs from the other parts of the battery system, the charger may be used to selectively charge e.g. first the fixed battery pack and later the removable battery pack. Furthermore, the electrical adapter may electrically isolate the fixed battery pack from the charger, such that the removable battery pack can be charged first before the fixed battery pack is charged. Thus, the electrical adapter already gives control over the time that the fixed battery pack is charged via the charger.

Depending on the external power supply, the charger may be more or less complex. For example, if the external power supply is an AC current, such as the mains, the charger should convert the AC current to a conditioned DC current. As another example, the external power supply may be a conditioned DC current suitable for directly charging the removable battery pack. The charger will be only wiring connecting the charge connector and the battery bay and/or the charger connector and the electrical adapter, typically on an electrical side which also connects to the battery bay.

The embodiment advantageously allows to sense the temperature of the fixed battery pack. As the fixed battery pack is fixed in the battery system and/or the electrical vehicle, the fixed battery system typically has a temperature control unit. The temperature control unit may be able to cool and/or heat the fixed battery pack. The cooling may be done actively by drawing heat energy from the fixed battery pack by running a cooling liquid through or close by the fixed battery pack or for example Peltier elements. The heating may be done by e.g. relatively simple resistive heating. Having a temperature control unit controlling or regulating the temperature of the fixed battery pack allows the fixed battery pack to have a higher maximum power, preferably a higher maximum continuous power, and/or an extension of the lifetime of the fixed battery pack. Typically, the fixed battery pack is not easily removed from the battery system and/or the electrical vehicle as it is fixed. Enabling a higher power draw, as well as extending the lifetime of the fixed battery pack has therefore a clear advantage.

The system controller with the additional steps for placing the fixed battery pack inside the temperature range for charging provides the advantage of extending the ambient operating temperatures and/or lifetime of the fixed battery pack. If for example the fixed battery pack is below the fixed charge temperature range, the fixed temperature control unit may heat the fixed battery pack by discharging the fixed battery pack into the fixed temperature control unit for advantageously heating the fixed battery pack via the fixed temperature control unit as well as through the internal impedance of the fixed battery pack. This shortens the time needed for bringing the inside the fixed temperature charge range, when the fixed battery pack is too cold, for advantageously starting to charge the fixed battery pack sooner. Furthermore, in relation to the electrical adapter, able to electrically isolate the charger from the fixed battery pack, the charging of the removable battery pack in the battery bay may advantageously already start during the heating of the fixed battery pack.

In a further embodiment of the battery system, the system controller is also arranged for the steps of: receiving a removable temperature measurement from a removable temperature sensor arranged for sensing the temperature of the removable battery pack; if the removable temperature measurement is below the removable charge temperature range and inside the removable discharge temperature range, controlling the discharge of the removable battery pack into the fixed temperature control unit for adjusting the fixed temperature towards the fixed charge temperature range or if additionally the fixed temperature measurement is inside the fixed charge temperature range, controlling the discharge of the removable battery pack for charging the fixed battery pack; and if the removable temperature measurement is inside the removable charge temperature range, controlling charging the removable battery pack via the charger.

The removable battery pack typically has no temperature control unit. The absence of the temperate control unit provides the advantage that the removable battery may be more easily removable compared to when a temperature control unit for controlling the temperature of the removable battery pack is present. The removable temperature control unit typically requires an extra connector, such as an extra connector for a cooling liquid, in the battery bay and/or takes up space in the removable battery pack reducing the energy density of the removable battery pack.

As the removable battery pack typically has a high energy density, also typically the removable battery pack has a relatively high internal impedance. This high internal impedance may advantageously be used to heat the removable battery pack by discharging the removable battery pack. This discharge current can advantageously be used to charge the fixed battery pack and/or heat the fixed battery pack for using the energy inside the removable battery pack more efficiently. Furthermore, this meticulously controlling of the temperature of the removable battery pack and/or the fixed battery pack allows for advantageously extending the lifetime of the battery system as a whole and specifically of the removable battery pack and/or the fixed battery pack.

In an embodiment of the battery system, the system controller comprises multiple processors forming a distributed controller, wherein the fixed battery pack comprises a processor; wherein the removable battery pack comprises a processor; and/or wherein the electrical adapter comprises a processor.

The system controller has a clearly specified number of tasks. These tasks may be executed by a central processor running software and connected to several sensors and actuators throughout the battery system and/or electrical vehicle. Alternatively, these tasks may be executed by a distributed network of processors running software. For example, each sensor may be serviced by a dedicated processor, wherein this processor processes or pre-processes the information from the sensor. As another example, each actuator may be serviced by a dedicated processor, wherein this processor receives instructions from another part of the battery system for processing these instructions to an actuator signal to the actuator. Typically, the system controller will comprise a mix, wherein a large part of the tasks is executed in a central processor, while part of the tasks is executed in one or more distributed processor advantageously located close to the unit to be controlled.

In an embodiment of the battery system, the battery system comprises: a second battery bay having an electrical connector for receiving and connecting to a second removable battery pack comprising a set of terminals for electrically connecting the second removable battery pack; wherein the electrical adapter is also arranged for electrically connecting the second removable battery pack to the removable battery pack and/or the fixed battery pack; and wherein the system controller is also arranged for the steps of: receiving a second presence indicator indicating presence of a second removable battery pack in the second battery bay; obtaining a second removable state indicator based on a state of charge of the second removable battery pack and/or a terminal voltage of the second removable battery pack; determining if charge of the second removable battery pack is to be provided to the fixed battery pack, the propulsion system and/or the first removable battery pack based on the different state indicators of the different battery packs; and controlling the electrical adapter to transfer charge to or from the second removable battery pack.

The battery system may comprise multiple battery bays for holding multiple removable battery packs. Having multiple removable battery packs provides the advantage of having a lot more energy inside the battery system and/or the electrical vehicle while keeping the removable battery packs good removable, such as portable, preferably light weight.

In a further embodiment of the battery system, the system controller is also arranged for the steps of: comparing the removable state indicator and the second removable state indicator; selecting the removable battery pack with the lowest value for the removable state indicator; determining if charge of the selected removable battery pack is to be provided to the fixed battery pack and/orthe propulsion system also based on the comparison; controlling the electrical adapter to transfer charge from the selected removable battery pack to the fixed battery pack and/or the propulsion system. Although detailed for two removable battery packs, the embodiment may be extended to comprises more than two removable battery packs.

Typically, the removable battery pack closest to be depleted is selected for withdrawing energy from. The removable battery pack closest to depletion is typically the removable battery pack with the lowest state of charge. This provides the advantage of having one of the removable battery packs quickly ready for swapping. Furthermore, this provides the advantage of not having multiple partially charged or discharged removable battery packs. The selection of the removable state indicator may apart from the state of charge take other factors into account, such as the lifetime of the battery pack, type of chemistry of the battery pack, overall capacity of the battery pack, which is the multiplication of the volume times the energy density of the battery pack. Typically, the capacity of the battery pack is determined such as calculated e.g. based on the extracted charge.

Furthermore, depending on the situation of the battery system, such as the state of charge of the fixed battery pack, the fixed battery pack temperature, the state of charge of the removable battery pack and/or the required energy by the propulsion system, may influence the amount of energy that needs to be transferred from the removable battery pack to the fixed battery pack, propulsion system, and/or to the temperature control unit.

A further possible implementation for selecting a removable battery pack from the multiple removable battery packs based on their state may be an implementation ranking the value of the state of the removable packs using a piece of software, optionally executed by a processor local to the removable packs. This ranking works by each removable pack communicating its state to the other removable packs, in which a ranking of the states will then be made separately. For discharging, when a pack ends up being the lowest in this ranking, but its state is above a lower threshold, this means that pack shall become active, thus opening its switches for discharging. The other packs will come up at another position in the ranking, and will thus not become active. An additional feature may be that if the pack that is lowest in the ranking does not become active within a set time frame, the next lowest pack will detect this, and will become active, such as set its switches for discharging, instead. For charging this works similar, but instead the highest state pack will become active first, such as settings its switches for charging.

Even another implementation is similar to the preceding implementation, however, based on comparing all of the individual states, such as state values. In this implementation the state of each battery pack is communicated to the others, and then compared to each of the individual values in a piece of software. Only if the state of one battery pack is lower than all the others the pack shall be allowed to become active.

Even another implementation is communication of the states to a central control box, where a ranking or comparison, such as in the above implementations, is done in software. Once the software made a decision, a message is communicated to the pack that needs to become active, such as instructing to set its switches appropriately for charging and/or discharging.

In an embodiment of the battery system, the battery system comprises: a battery arranged for storing electrical energy providing a battery voltage; a directional charge switch arranged for switching a charge current of the removable battery pack; a directional discharge switch arranged for switching a discharge current of the removable battery pack; a second directional charge switch arranged for switching a charge current of the second removable battery pack; and a second directional discharge switch arranged for switching a discharge current of the second removable battery pack; wherein the directional charge switch leaves the discharge current of the removable battery pack unrestrained; wherein the directional discharge switch leaves the charge current of the removable battery pack unrestrained; wherein the second directional charge switch leaves the discharge current of the second removable battery pack unrestrained; and wherein the second directional discharge switch leaves the charge current of the second removable battery pack unrestrained. This embodiment advantageously lets the charge current and the discharge current to be controlled between the removable battery pack and the second removable battery pack by the respective directional switch. Typically, the directional switches are controlled via the system controller. The system controller may control the switches directly or via an intermediate processor, receiving the commands from the system controller and providing status information of the directional switches to the system controller.

The directional switches advantageously allow for electrically isolating the removable battery pack in the battery bay from the other electrical parts of the battery system. This electrically isolating provides enhanced safety, as it prevents the removable battery pack from uncontrolled charging or discharging into the other removable battery pack, which may cause extremely high and dangerous currents. Furthermore, electrically isolating allow swapping of the removable battery pack without sparks or electrostatic discharges taking place. Especially when high ohmic discharge impedances are applied inside the battery system and/or in the removable battery pack.

The directional switches providing electrical isolation of the removable battery pack are specifically advantageous if multiple battery bays for holding multiple removable battery packs at the same time are present. In this embodiment, a single electrical adapter may be employed for transferring energy from the first port to the second port of the electrical adapter, wherein the first port is electrically connected to the respective connectors of the battery bays and the second port is electrically connected to the terminals of the fixed battery pack. This embodiment provides the advantage of requiring at least one relatively complex electrical adapter and only needing a set of directional switches per battery bay or removable battery pack.

Furthermore, the directional switches, when split in a directional charge switch and a directional discharge switch advantageously allow for seamlessly switching the current from the removable battery pack to the second removable battery pack.

In a further embodiment of the battery system, the directional charge switch and the directional discharge switch are electrically coupled in series and/or parallel; and/or the second directional charge switch and the second directional discharge switch are electrically coupled in series and/or parallel.

In an embodiment of the battery system, the battery system comprises: the directional charge switch and the directional discharge switch are identical in electrical circuit and are electrically coupled in mirrored positions; and/or the second directional charge switch and the second directional discharge switch are identical in electrical circuit and are electrically coupled in mirrored positions. This provides the advantage of duplicating a relatively simple circuit for simplifying the battery system as a whole.

In a further embodiment of the battery system, the directional charge switch comprises a FET for switching the charge current of the removable battery pack; the directional discharge switch comprises a FET for switching the discharge current of the removable battery pack; the second directional charge switch comprises a FET for switching the charge current of the second removable battery pack; and/or the second directional discharge switch comprises a FET for switching the discharge current of the second removable battery pack. A FET for this type of high-power applications typically has a low drain-source resistance, advantageously reducing the energy losses when conducting a current.

In a further embodiment of the battery system, the FET is a JFET or a MOSFET in at least one, preferably all directional switches; and at least one, preferably all, the directional switches comprise a diode electrically arranged parallel to the drain and source of the FET for, depending on if the directional switch is a directional charge switch or a directional discharge switch, leaving respectively the discharge current or the charge current unrestrained.

In a further embodiment of the battery system, the FET is a MOSFET in at least one, preferably all directional switches; the MOSFET comprises a drain terminal, a source terminal, a gate terminal and a substrate terminal; the source terminal is electrically coupled to the substrate terminal; and the diode is formed by the substrate-drain junction. The substrate-drain junction is a junction capable of advantageously conducting a current, typically for a short moment of time, without degrading or damaging the MOSFET.

In a further embodiment of the battery system, the directional charge switch and the directional discharge switch each and/or the second directional charge switch and the second directional discharge switch comprise: a thyristor; and an electronic switching element electrically arranged over the thyristor and configured for bringing the thyristor in a blocking mode.

In a further embodiment of the battery system, the directional charge switch and the directional discharge switch are integrated in one switch module; and/or the second directional charge switch and the second directional discharge switch are integrated in one switch module.

In a further embodiment of the battery system, the integrated switch module comprises: a TRIAC; and an electronic switching element electrically arranged over the TRIAC and configured for bringing the TRIAC in a blocking mode. The electronic switch may be a FET, such as specified above. Specifically, the substrate-drain junction should be configured such that this junction is in reverse for all possible voltages applied. The electronic switch may be used to only allow the TRIAC to build up its reverse junction to block current. In this example the electronic switch may be operated by a pulse for temporarily closing and thereafter opening again. This embodiment provides the advantage of having a TRIAC which is capable of conducting high-power for a longer period of time, while the electronic switch may be a relatively light switch, such as a lower duty FET, which is only capable of temporarily conducting high-power. The same for the electronic switch applied in the embodiment for the thyristor.

In a further embodiment of the battery system, the battery system comprises: a removable battery pack controller for controlling the removable battery pack; and a second removable battery pack controller for controlling the second removable battery pack; wherein the removable battery pack controller and the second removable battery pack controller are arranged for the step of communicating with each other for switching a current from the removable battery pack to the second removable battery pack. As stated above, the directional switches advantageously allow for the battery system to operate with only one electrical adapter. In this embodiment is detailed that each of the respective removable battery packs has a removable battery pack controller for transferring the current from the first removable battery pack to the second removable battery pack. The removable battery pack controllers may be part of the system controller of the battery system or may be considered separate.

In a further embodiment of the battery system, the step of communicating of the removable battery pack controller comprises the steps of: obtaining a present state indicator based on a present state of charge of the removable battery pack and/or the removable battery pack voltage; comparing the present state indicator with a state threshold; selecting one other removeable battery pack from the at least one other removeable battery pack based on state indicators of the at least one other removeable battery pack; if the present state indicator exceeds the state threshold, transmitting a request current transfer message to the selected one other removeable battery pack for switching the current to the selected one other removeable battery pack; and receiving an acknowledge current transfer message from the selected one other removeable battery pack.

A rechargeable battery typically has a maximum state of charge threshold and a minimum state of charge threshold. The maximum state of charge threshold indicates the maximum charge that can be held by the battery. If the state of charge exceeds the maximum state of charge threshold, the battery is potentially damaged or the lifetime of the battery may be shortened. The minimum state of charge threshold indicates the maximum charge that can be drawn from the battery. If the state of charge exceeds the minimum state of charge threshold, the battery is potentially damaged or the lifetime of the battery may be shortened. The state threshold may comprise the minimum state of charge threshold and/or the maximum state of charge threshold.

The selecting step may be done by the removable battery pack controller, the second removable battery pack controller and/or the system controller. The selecting step typically advantageously selects the battery closed to depletion. Closest to depletion may be relative or absolute. The depletion state may be indicated by the present state indicator. Other factors may be taken into account for the selection of the second removable battery pack, such as internal impedance of the second removable battery pack and the temperature of the second removable battery pack.

In a further embodiment of the battery system, the step of communicating of the second removable battery pack controller comprises the steps of: receiving a state request for providing a state indicator; obtaining a second present state indicator based on a present state of charge of the second removable battery pack and/or the second removable battery pack voltage; and transmitting a state reply comprising a reply indicator based on the state indicator to the removable battery controller. This embodiment advantageously provides to anyone dispatching a state request to the second removable battery pack the status of the second removable battery pack. The requester dispatching the request may be any other removable battery pack, the system controller or a requester outside the battery system, for example for external diagnosis of the second removable battery pack.

In a further embodiment of the battery system, the step of comparing of the removable battery pack controller comprises the step of: determining if a charge current is present; and wherein if a charge current is present, the state threshold is based on a maximum threshold and otherwise the state threshold is based on a minimum threshold. This embodiment advantageously links the charge current to the maximum threshold and the discharge current to the minimum threshold.

In a further embodiment of the battery system, the received state request by the second removable battery pack controller comprises a charge indicator indicating if the removable battery pack is charging or discharging, and wherein the reply indicator is also based on a state maximum threshold if the charge indicator indicates that the other removable battery pack is charging and a state minimum threshold otherwise. The second removable battery pack advantageously provides the reply indicator based on a relevant threshold. The relevant threshold is typically based on if the battery system is charging or discharging the active removable battery pack.

In a further embodiment of the battery system, the step of selecting of the removable battery pack controller comprises the steps of: retrieving the state indicator and the state threshold of at least one other removable battery pack, preferably all, from the at least one other removable battery pack; and selecting another removable battery pack based on a difference between the retrieved state indicator and the retrieved state threshold. The selection may be based on which other removable battery pack is relatively or absolutely closest to its threshold, or which state indicator has the most extreme value. This selection provides the advantage of having one of the removable battery packs relatively quick ready for swapping as the removable battery pack is depleted.

In an embodiment of the battery system, the step of communicating of the second removable battery pack controller comprises the steps of: receiving a request current transfer message; switching the second removable battery pack in a state for receiving the current; and transmitting an acknowledge current transfer message. The directional switches are typically advantageously switched one by one for switching the current from the removable battery pack to the second removable battery pack. A further advantage may be that the current is switched seamlessly by breaking up the switching in two steps, wherein a directional switch is switched on or off in each step.

In a further embodiment of the battery system, the step of transmitting of the removable battery pack controller comprises the step of determining a removable battery pack voltage indicator based on the removable battery pack voltage, and wherein the request current transfer message comprises the removable battery pack voltage indicator. Switching from one removable battery pack to another removable battery pack while active requires that the removable battery packs are electrically isolated from each other. The two-step switching of the current provides the advantageous electrical isolation. Without the electrical isolation between the removable battery packs based on a voltage difference between the terminals of the respective removable battery packs a short circuit current via the terminals of the respective removable battery packs may arise. Thus, providing the removable battery pack voltage provides the advantage of safe current switching.

In a further embodiment of the battery system, the step of communicating of the removable battery pack controller also comprises the steps of: after transmitting the request current transfer message, receiving a reply current transfer message from the selected one other removable battery pack, wherein the message comprises another removable battery pack voltage indicator based on the removable battery pack voltage of the selected one other removable battery pack; comparing the removable battery pack voltage indicator and the other removable battery pack voltage indicator; and if the removable battery pack voltage indicator is positive, or the removable battery pack voltage indicator is higher than the other removable battery pack voltage indicator, switching off the directional discharge switch associated with the removable batter pack and otherwise switching off the directional charge switch associated with the removable battery pack; and after completing the switching step, transmitting a ready current transfer message. This embodiment advantageously details the sequence of switching the directional switches associated with the removable battery pack for safely switching the current from the removable battery pack to the second removable battery pack. Additionally, this switching allows only one electrical adapter to be employed for electrically connecting the active removable battery pack to the fixed battery pack.

In a further embodiment of the battery system, the step of receiving of the second removable battery pack controller comprises the steps of: determining a battery voltage indicator based on the battery voltage; and retrieving another battery voltage indicator from the other removeable battery pack from the received request current transfer message; and wherein the step of switching comprises the steps of: if the battery voltage indicator is higher than the other battery voltage indicator, switching on the directional charge switch associated with the second removable battery pack and otherwise switching on the directional discharge switch associated with the second removable battery pack; and after completing the switching step, transmitting a reply current transfer message, wherein the message comprises an indicator based on the battery voltage indicator. This embodiment advantageously details the sequence of switching the directional switches associated with the second removable battery pack for safely switching the current from the removable battery pack to the second removable battery pack. Additionally, this switching allows only one electrical adapter to be employed for electrically connecting the active removable battery pack to the fixed battery pack.

In a further embodiment of the battery system, the removable battery pack controller is also arranged for the step of: after receiving the acknowledge current transfer message, switching off any of the directional switches associated with the removable battery pack which were on. This embodiment advantageously details the end of the sequence of switching of the removable battery pack.

In a further embodiment of the battery system, the step of switching on the second removable battery pack controller comprises the steps of: receiving the ready current transfer message; after receiving the ready current transfer message, switching on any of the directional switches associated with the second removable battery pack which were off and thereafter transmitting the acknowledge current transfer message. This embodiment advantageously details the end of the sequence of switching of the second removable battery pack.

According to another aspect of the invention, an electrical vehicle comprising: a propulsion system for propelling the electrical vehicle; and a battery system according to any of the preceding claims for electrically powering the propulsion system. The electrical vehicle comprising the inventive battery system provides the advantages as mentioned throughout the text.

According to another aspect of the invention, a method for a battery system for an electrical vehicle, comprising the steps of: electrically powering a propulsion system of an electrical vehicle via a set of terminals of a fixed battery pack; receiving and connecting to a removable battery pack comprising a set of terminals for electrically connecting the removable battery pack in a battery bay; electrically connecting via an electrical adapter the removable battery pack and the fixed battery pack via the respective terminals; obtaining a fixed state indicator based on a state of charge of the fixed battery pack and/or a terminal voltage of the fixed battery pack; receiving a presence indicator indicating presence of a removable battery pack in the battery bay; obtaining a removable state indicator based on a state of charge of the removable battery pack and/or a terminal voltage of the removable battery pack; determining if charge of the removable battery pack is to be provided to the fixed battery pack and/or the propulsion system based on the fixed state indicator and/or the removable state indicator; and controlling the electrical adapter to transfer charge from the removable battery pack to the fixed battery pack and/or the propulsion system, wherein the current from the removable battery pack is lower than the peak current required for the propulsion system. The method closely associated with the inventive battery system provides the advantages as mentioned throughout the text.

In a further embodiment of the method for a battery system, the method comprises the steps of: providing a removable battery pack comprising a set of terminals for electrically connecting the removable battery pack; providing a second removable battery pack comprising a set of terminals for electrically connecting the second removable battery pack; obtaining a removable state indicator based on a state of charge of the removable battery pack and/or the terminal voltage of the removable battery pack; comparing the removable state indicator with a state threshold from the removable battery pack; obtaining a second removable state indicator based on a second removable battery pack state of charge of the second removable battery pack and/or the second terminal voltage of the second removable battery pack; comparing the second removable state indicator with a second state threshold from the second removable battery pack; if the first state indicator exceeds the first state threshold and the second state indicator does not exceed the second state threshold, switching the current from the first removeable battery pack to the second removeable battery pack. The method closely associated with the inventive battery system provides the advantages as mentioned throughout the text.

According to another aspect of the invention, a method for a system controller of a battery system according to any of the embodiments in this text, wherein the system controller is arranged for the steps of: obtaining a fixed state indicator based on a state of charge of the fixed battery pack and/or a terminal voltage of the fixed battery pack; receiving a presence indicator indicating presence of a removable battery pack in the battery bay; obtaining a removable state indicator based on a state of charge of the removable battery pack and/or a terminal voltage of the removable battery pack; determining if charge of the removable battery pack is to be provided to the fixed battery pack and/or the propulsion system based on the fixed state indicator and/or the removable state indicator; and controlling the electrical adapter to transfer charge from the removable battery pack to the fixed battery pack and/or the propulsion system, wherein the current from the removable battery pack is lower than the peak current required for the propulsion system. The method for a system controller closely associated with the inventive battery system provides the advantages as mentioned throughout the text.

According to another aspect of the invention, a computer program product comprising a computer readable medium having computer readable code embodied therein, the computer readable code being configured such that, on execution by a suitable computer or processor, the computer or processor is caused to perform the steps of the method of any of the embodiments in this text. The met computer program product closely associated with the inventive battery system provides the advantages as mentioned throughout the text.

According to another aspect of the invention, a battery module arranged for electrically powering a propulsion of an electrical vehicle, comprising: a battery arranged for storing electrical energy providing a battery voltage; a directional charge switch arranged for switching a charge current of the battery; a directional discharge switch arranged for switching a discharge current of the battery; and a connector adapted for connecting the battery module to the electrical vehicle and arranged for conducting the charge and discharge currents of the battery; wherein the directional charge switch leaves the discharge current of the battery unrestrained; and wherein the directional discharge switch leaves the charge current of the battery unrestrained. The battery is typically a removable battery. The removable battery may comprise the directional switches. In an alternative embodiment, the battery is associated with the directional charge and/or the directional discharge switch. For example, the directional charge and the directional discharge switch may be part of the battery bay of a battery system or any other part of the electrical circuit of a battery system such that if the directional switches associated with the battery are switched off, the battery is electrically isolated from the other parts of the battery system. This aspect of the invention may be combined with any other embodiment mentioned throughout the text, specifically this aspect of the invention may be advantageously combined with embodiments detailing the switching of the current from a removable battery pack to a second removable battery pack.

### BRIEF DESCRIPTION OF THE DRAWINGS

The invention will be apparent from and elucidated further with reference to the embodiments described by way of example in the following description and with reference to the accompanying drawings, in which: Figure 1 schematically shows an embodiment of the battery system; Figure 2 schematically shows a graph of the characteristics of different types of battery chemistries; Figure 3 schematically shows a removable battery pack and a first embodiment of directional switches; Figure 4 schematically shows a second embodiment of a directional switch; Figure 5 schematically shows a third embodiment of a directional switch; Figure 6 schematically shows a fourth embodiment of a directional switch; Figure 7 schematically shows a fifth embodiment of a directional switch; Figure 8 schematically shows a sequence diagram for current transfer; Figure 9 schematically shows an embodiment of a computer program product; Figure 10a-10e the sequence of switching the switches in the respective removeable battery packs to seamlessly switch a discharge current from the first removeable battery pack to the second removeable battery pack with B(V)>A(V); Figure 11a to 11e show the sequence of switching the switches in the respective removeable battery packs to seamlessly switch a charge current from the first removeable battery pack to the second removeable battery pack with B(V)>A(V); Figure 12a to 12e show the sequence of switching the switches in the respective removeable battery packs to seamlessly switch a discharge current from the second removeable battery pack to the first removeable battery pack with B(V)>A(V); and Figure 13a to 13e show the sequence of switching the switches in the respective removeable battery packs to seamlessly switch a charge current from the second removeable battery pack to the first removeable battery pack with B(V)>A(V). The figures are purely diagrammatic and not drawn to scale. In the figures, elements which correspond to elements already described may have the same reference numerals.

**LIST OF REFERENCE NUMERALS**

| | |
|---|---|
| 11 | load |
| 100 | battery system |
| 101 | charger connector |
| 102 | positive charger input terminal |
| 103 | negative charger input terminal |
| 105 | load connector |
| 106 | positive load terminal |
| 107 | negative load terminal |
| 110 | fixed battery pack |
| 111 | positive terminal |
| 112 | negative terminal |
| 115 | temperature control unit |
| 120 | first battery bay |
| 121 | positive terminal of first battery bay |
| 122 | negative terminal of first battery bay |
| 130 | second battery bay |
| 131 | positive terminal of second battery bay |
| 132 | negative terminal of second battery bay |
| 140 | electrical adapter |
| 150 | system controller |
| 160 | charger |
| 200 | method for a battery system |
| 210 | obtaining fixed state indicator |
| 220 | receiving presence indicator |
| 230 | obtaining removable state indicator |
| 240 | determining if charge providing |
| 250 | controlling electrical adapter |
| 260 | controlling temperature control unit |
| 300 | graph showing typical chemistry performances |
| 310 | high energy Li-ion |
| 315 | Li-polymer |
| 320 | Na-NiCI2 |
| 325 | medium range Li-ion |
| 330 | NiMH |
| 335 | high power Li-ion |
| 340 | Ni-Cd |
| 345 | lead-acid (submarines) |
| 350 | lead |
| 355 | supercapacitor |
| 400 | removable battery pack and first embodiment of directional switches |
| 401 | first connector |
| 402 | second connector |
| 403 | third connector |
| 410 | stack of battery cells |
| 411 | battery cells |
| 420 | directional discharge switch |
| 425 | discharge MOSFET |
| 426 | source port of directional discharge switch |
| 427 | drain port of directional discharge switch |
| 428 | gate port of directional discharge switch |
| 430 | discharge bypass diode |
| 440 | directional charge switch |
| 445 | charge MOSFET |
| 446 | drain port of directional charge switch |
| 447 | source port of directional charge switch |
| 448 | gate port of directional charge switch |
| 450 | charge bypass diode |
| 500 | second embodiment of directional switch |
| 525 | switching element |
| 526 | first port of directional switch |
| 527 | second port of directional switch |
| 528 | control port of directional switch |
| 530 | bypass diode |
| 600 | third embodiment of directional switch |
| 625 | switching element |
| 626 | first port of directional switch |
| 627 | second port of directional switch |
| 628 | control port of directional switch |
| 630 | directional diode |
| 700 | fourth embodiment of directional switch |
| 725 | switching element |
| 726 | first port of directional switch |
| 727 | second port of directional switch |
| 728 | first control port of directional switch |
| 730 | thyristor diode |
| 731 | second control port of directional switch |
| 800 | fifth embodiment of integrated directional switches |
| 825 | switching element |
| 826 | first port of directional switch |
| 827 | second port of directional switch |
| 828 | control port of mode switch |
| 830 | TRIAC |
| 831 | TRIAC control port |
| 900 | sequence diagram between removable battery pack controllers |
| 910 | first removable battery pack controller |
| 920 | second removable battery pack controller |
| 930 | state request message |
| 935 | state reply message |
| 940 | request current transfer message |
| 945 | reply current transfer message |
| 950 | ready current transfer message |
| 955 | acknowledge current transfer message |
| 1000 | computer program product |
| 1010 | computer readable medium |
| 1020 | computer readable code |
| 1100 | switching battery packs |
| 1110 | first removeable battery pack |
| 1111 | first battery |
| 1112 | first discharge switch |
| 1113 | first charge switch |
| 1120 | second removeable battery pack |
| 1121 | second battery |
| 1122 | second discharge switch |
| 1123 | second charge switch |
| 1130 | load |
| 1131 | ground |

### DETAILED DESCRIPTION OF EXEMPLARY EMBODIMENTS

The following figures may detail different embodiments. Embodiments can be combined to reach an enhanced or improved technical effect. These combined embodiments may be mentioned explicitly throughout the text, may be hint upon in the text or may be implicit. Equal numbers for features in different figures may reference to the equal features.

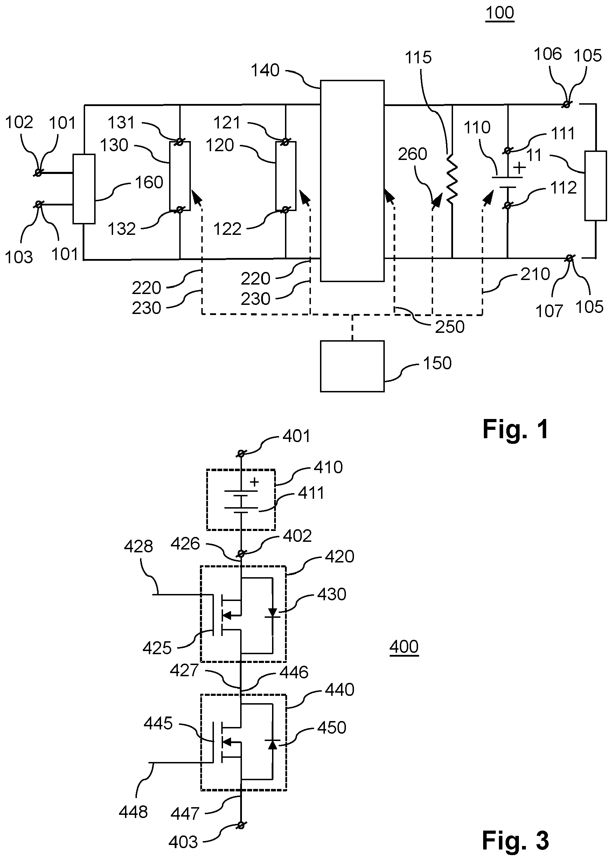

Figure 1 schematically shows a first embodiment of a battery system 100. The battery system comprises a fixed battery pack 110, a battery bay 120, an electrical adapter 140 and a system controller 150.

The fixed battery pack comprises a positive terminal 111 and a negative terminal 112, wherein both terminals together form a set of terminals for electrically connecting the fixed battery pack. The fixed battery is electrically connected to a load 11 preferably via a load connector 105. The load may be a propulsion system of an electrical vehicle. Alternatively, the load may be a propulsion system of any other device. Alternatively, the load may be any type of electrical system dissipating electrical energy. The load may also be a source of electrical energy, preferably temporarily, during e.g. regenerative braking in an electrical vehicle.

The load connector comprises a positive load terminal 106 and a negative load terminal 107. The load connector may be an unpluggable coupling. The load connector may be a set of screws and wires placed under the screws for making the connection. The load connector may be any other electrical connector.

The battery bay or first battery bay comprises an electrical connector. The battery bay and specifically the connector are arranged for receiving a removable battery pack. The electrical connector comprises a positive terminal 121 of the first battery bay and a negative terminal 122 of the first battery bay.

Typically, the removable battery pack placed in the battery bay has a different voltage over its terminals compared to the voltage over the terminals of the fixed battery pack. The electrical adapter adapts or functionally couples the removable battery pack and the fixed battery pack. The electrical adapter typically is also arranged for adapting to changing output needs, such as changing loads and/or if the fixed battery pack is charging or discharging and/or supplying the temperature control unit.

Optionally, the battery system comprises a temperature control unit 115. The temperature control unit is arranged for controlling the temperature of the fixed battery pack. Controlling the temperature may comprise heating, cooling or both. The temperature control unit may be an integral part of the fixed battery pack. The temperature control unit may be arranged electrically parallel to the fixed battery pack. The temperature control unit may be electrically connected directly to the electrical adapter providing more control over the source of the power for the temperature control unit. The temperature control unit may be controlled by the system controller. Alternatively, the temperature control unit may be controlled by the system controller via the electrical adapter. Alternatively, the temperature control unit may be stand-alone receiving its own sensor data for controlling the temperature of the fixed battery pack.

The electrical adapter may be a DC-DC convertor. The DC-DC convertor may be converting voltage or current to voltage or current. The electrical adapter may be stabilized around a stable input of energy, voltage or current on the battery bay side. Alternatively, the electrical adapter may be stabilized around a stable output of energy, voltage or current on the fixed battery side.

An additional electrical load adapter may be arranged to the load connector for electrically connecting the fixed battery pack to the load. This is typically the case when the required voltage and/or current by the load differs from the provided voltage by the fixed battery pack and/or the combined current sourced by the electrical adapter and the fixed battery pack. This additional electrical load adapter is specifically beneficial for providing a continuous energy, such as a continuous voltage and/or current, to the load, while the fixed battery pack may be switched from charging or discharging or vice versa. The control of the additional electrical load adapter is typically done by the system controller.

Optionally, the battery system comprises a second battery bay 130 comprising an electrical connector. The second battery bay and specifically the connector are arranged for receiving a second removable battery pack. The electrical connector comprises a positive terminal 131 of the second battery bay and a negative terminal 132 of the second battery bay.

The battery system may be loaded with new electrical energy by replacing the removable battery pack and/or the second removable battery pack. Optionally, the battery system comprises a charger 160. The charger has an output connected to the removable battery pack. Alternatively, the charger's output may be electrically connected to the fixed battery pack for charging the fixed battery pack and/or charging the removeable battery pack via the electrical adapter. The charger further comprises a charger connector 101 for inputting electrical energy in the charger. The charger connector comprises a positive charger terminal 102 and a negative charger input terminal 103.

The system controller may comprise a single processor receiving and sending information to all parts of the battery system for controlling the battery system. The system controller may comprise multiple processors communicating for as a whole functionally forming the system controller. The multiple processor may be arranged next to a part of the battery system that is controlled. For example, a processor may be arranged next to the fixed battery pack for monitoring the condition of the fixed battery pack. As another example, a processor may be arranged next to the electrical adapter for controlling the adapting of the electrical adapter. The system controller may comprise software functionally distributed over multiple processors. For example, the system controller may be distributed as separate task on a single processor or spread out over multiple processor, which may be handling other tasks falling outside the scope of the system controller as well.

The system controller executes a method 200 for the battery system for letting the battery system function according to the invention. The method starts with obtaining 210 a fixed state indicator. The fixed state indicator may be based on a state of charge of the fixed battery pack. The fixed state indicator may be based on a terminal voltage of the fixed battery pack. The fixed state indicator may be based on a combination of the state of charge of the fixed battery pack and the terminal voltage of the fixed battery pack. The fixed state indicator may also be extended with on the temperature of the fixed state battery pack. The fixed state indicator may also be based on the history of the fixed state battery pack, such as the number of charge and discharge cycles and/or the temperatures in the past. The fixed state indicator may also be based on the internal impedance or any other electrical characteristics of the fixed state battery pack. Typically, the fixed state indicator is based on a combination of the preceding parameters combined in an advanced algorithm. The fixed state indicator may be a single value. The fixed state indicator may be a structure of multiple values.

The method continuous with receiving 220 a presence indicator. The presence indicator indicates the presence of a removable battery pack in the battery bay. The system will typically be operated with the removable battery pack present. The message received comprising the presence indicator may be dispatched by e.g. a switch physically detecting the presence of the removable battery pack. The system controller may than receive an electrical signal from this switch. Alternatively, the presence detection may be done by a dedicated sensor dispatching a message, e.g. a CAN, IP/TCP, or IP/UDP message, over a bus connecting the dedicated sensor to the system controller.

The method continuous with obtaining 230 a removable state indicator. The removable state indicator is based on parameters or combination of parameters mentioned for the fixed battery pack above and throughout the text. Preferably, the removable battery pack comprises a sensor comprising a processor and memory for maintaining the state of charge of the battery pack directly associated with the removable battery pack. Alternatively, the battery system, specifically the battery bay or part associated with the battery bay may comprise the sensor for determining the state of charge of the removable battery pack.

The method may continue with determining 240 if charge of the removable battery pack is to be provided to the fixed battery pack. The method may continue with determining 240 if charge of the removable battery pack is to be provided to the propulsion system. The method may continue with determining 240 if charge of the removable battery pack is to be provided to the fixed battery pack and the propulsion system. Typically, the determining 240 step determines if charge of the removable battery pack is to be provided to the other side of the electrical adapter relative to the removable battery pack.

The method may continue with controlling 250 the electrical adapter to transfer charge from the removable battery pack to the fixed battery pack. The method may continue with controlling 250 the electrical adapter to transfer charge from the removable battery pack to the propulsion system. The method may continue with controlling 250 the electrical adapter to transfer charge from the removable battery pack to the fixed battery pack and the propulsion system. Typically, the controlling step controls that charge of the removable battery pack is provided to the other side of the electrical adapter relative to the removable battery pack.

Additionally, the controlling step may also comprise controlling the transfer of charge from the fixed battery pack to the removable battery pack or even the charger in case of regeneration of the load, such as for example during regenerative breaking of a vehicle. In an alternative embodiment, the battery system may be used for providing energy to the mains via the charger, such as an electrical vehicle being used as energy storage during the night. In this alternative embodiment and for other reasons, the electrical adapter may advantageously also be suitable to transfer charge from the fixed battery pack to the removable battery pack.

During operation, the battery system is typically not constantly used at its operational limits. Two situations are distinguished. One of nominal use and one of maximal use of the battery system. During nominal use, a nominal current is drawn by the load from the battery system. During maximum use, a maximum current or peak current is drawing by the load from the battery system. If the example of an electrical vehicle is taken, the peak current is drawn at maximum acceleration of the electrical vehicle and the nominal current is drawn at a particular cruising speed of the electrical vehicle.

Typically, during nominal use, the nominal current is a substantially constant current or current in a range well below the peak current. Typically, during maximum use, the peak current may be a high current for a short period of time. The battery system advantageously allows the load to draw changing currents or power from the battery system. The battery system is adaptable in that the current may be drawn from the fixed battery pack and/or the removable battery system. This adaptation is possible through the electrical adapter controlled by the system controller. In one situation, if the electrical adapter outputs no current, all current drawn from the battery system is supplied by the fixed battery pack. In another situation, the electrical adapter may output a voltage equal to the output or terminal voltage of the fixed battery pack. In this situation, all current is provided by the electrical adapter and thus by the removable battery pack. In even another situation, the output voltage of the electrical adapter is higher compared to the output or terminal voltage of the fixed battery pack. In this situation, the electrical adapter and thus the removable battery pack provides all current for the load as well as current for charging the fixed battery pack.

The battery system may advantageously be configured that the discharge current of the removable battery pack through the electrical adapter and the fixed battery pack together are equal or higher than the peak current. The fixed battery pack may be seen as an energy or charge buffer for the removable battery pack. This allows for the constant current drawn from the removable battery pack to be significantly lower compared to the peak current. Drawing a low discharge current from a rechargeable battery advantageously extends the lifetime of this rechargeable battery. Hence, this battery system provides the advantage of a longer lifetime of the removable battery pack, while also providing high currents to the load, translating in high performance. Furthermore, the battery system may advantageously be configured such that the fixed battery pack is capable of providing the peak current on its own, wherein if the peak current is provided together with the removable battery pack providing the advantage of less stressing the fixed battery pack thereby extending the lifetime of the fixed battery pack. Furthermore, the battery system may advantageously be configured such that the fixed battery pack together with the removable battery pack are capable of providing the peak current together, wherein the battery system as a whole is advantageously capable of providing a higher than rated peak current and thus a higher performance while maintaining the lifetime of the fixed battery pack. Furthermore, the battery system may advantageously be configured to provide a combination of the preceding two advantages. Hence, the current invention provides an extension of the lifetime of the battery packs, a higher performing battery system or a combination of the two.

An electrical vehicle is preferably a light electrical vehicle. The electrical vehicle may comprise wheels or tracks for driving on a surface, such as a road, the number of wheels may be 1, 2, 3, 4 or more wheels. The electrical vehicle may be an automated guided vehicle, such as for transporting loads, goods and/or passengers. The electrical vehicle may be suitable for moving on or through water. The electrical vehicle may comprise a hull for forming an electrically powered boat. The electrical vehicle may be a robot system powered by the battery system.

In the art a distinction may be made between electrical propulsion with a high or a low voltage. A low voltage is typically below 75V, preferably below 70V, more preferably below 65V, most preferably 60V. 75V is typically taken in standards as the upper limit of low voltage electrical systems. Electrical propulsions outside the low voltage range typically require more safety measures making the propulsions more complex. A high voltage is typically above 200V, preferably above 400V, more preferably above 600V, most preferably above 800V. In some cases, the high and low voltage ranges may be adjacent to each other. The electrical architecture typically differs for low and high voltage systems. The electrical architecture may differ due to electrical safety. Furthermore, a low voltage system providing power to a propulsion should provide more current to the propulsion compared to a high voltage system providing the same power. This translates into that the high voltage system advantageously may use thinner electrical cables for the same electrical losses. In a preferred embodiment, the electrical vehicle is a low voltage electrical system thus having a low voltage electrical architecture.

A propulsion may be part of a driveline. The driveline may further comprise electrical components for arranging the electrical power to the required voltage and/or current, and/or the electrical signal to the required shape. A propulsion may be an electrical propulsion such as an electrical motor.

An electrical adapter may be a DC-DC converter. The electrical adapter at least has two electrical ports. A first port connected to the electrical connector of the battery bay and optionally to a charger. And a second port connected to the terminals of the fixed battery pack and optionally to the propulsion system of an electrical vehicle. The electrical adapter is at least arranged for transferring energy from the first port to the second port. Optionally, the electrical adapter is also arranged for transferring energy from the second port to the first port, for example during regeneration of the electrical vehicle. The electrical adapter typically also comprises a control port for controlling the energy transfer via the electrical adapter.

Furthermore, the electrical adapter may comprise a variable setting for the electrical adapter for forcing energy transfer from the first port to the second port or vice versa. This forcing may be done for example with a variable voltage setting for the DC-DC converter. This variable setting may be settable via the control port. For example, if the terminal voltage of the removable battery pack in the battery bay is lower compared to the terminal voltage of the fixed battery pack, for transferring energy from the removable battery pack to the fixed battery pack requires the electrical adapter to accept the low voltage on the first port and process the energy provided via the first port to energy supplied via the second port to the fixed battery pack, wherein the voltage on the second port is high enough to place the fixed battery pack in a state of charging or accepting the energy from the second port. Thus, the electrical adapter to function requires at least instructions via the control port. Further, the electrical adapter may require measured voltages provided via the control port or with voltage sensors providing information to the electrical adapter. The control port of the electrical adapter is typically functionally coupled to the system controller. Alternatively, the control port is part of a distributed system controller.

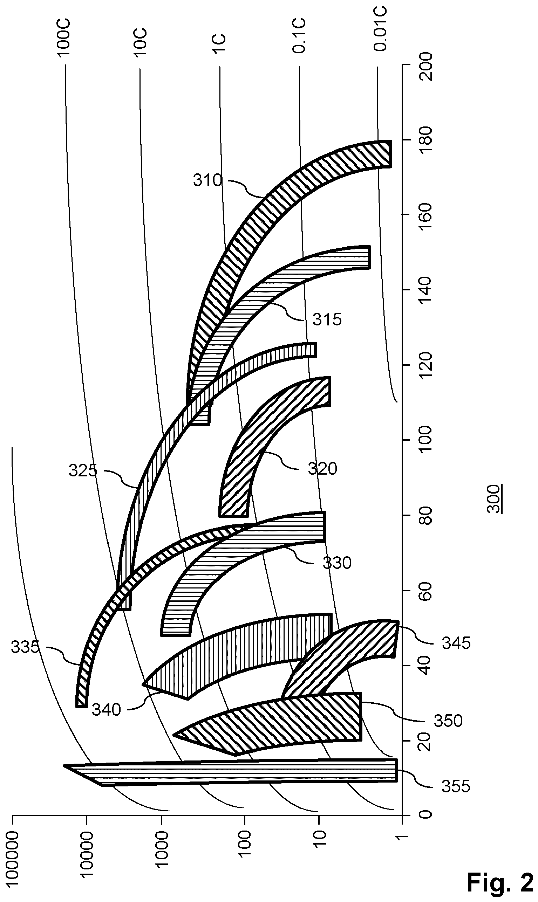

Figure 2 schematically shows a graph 300 of the characteristics of different types of battery chemistries. On the horizontal axis is the specific energy in Wh/kg or Watt hour per kilogram ranging from 0 to 200. On the vertical axis is the specific power in W/kg or Watt per kilogram. The different hatched surfaces in the graph show approximately where rechargeable batteries of a particular chemistry may be found the graph shows a first surface 310 for high energy Li-ion, a second surface 315 for Li-polymer, a third surface 325 for medium range Li-ion, a fourth surface 35 for high power Li-ion, a fifth surface 330 for NiMH, a sixth surface 335 for high power Li-ion, a seventh surface 340 for Ni-Cd, an eighth surface 345 for lead-acid (submarines), a ninth surface 350 for lead and a tenth surface 355 for supercapacitor.

Furthermore, the graph comprises curved lines specifying typical discharge rates at which these specific energies can be achieved. The different rechargeable batteries are located around where the curved discharge rate line intersects the surface for a particular chemistry. For example, rechargeable batteries capable of a discharge rate of 10 C having a NiMH chemistry have a rating between 55 and 65 Wh/kg and between 400 and 600 W/kg. It should be noted that the 1C-rate is the current needed to discharge completely in one hour. Typically, high power cells can be discharged at higher C-rates, but low C-rates are needed to extract more energy.

A battery may be optimized for providing power or capacity. A battery optimized for power is typically able to provide a lot of energy in a short amount of time. A battery optimized for capacity may hold a lot of electrical energy. If a battery is able to provide high power or has a high energy density depends for a substantial part on the chemistry of the cells of the battery. Typically, batteries with a cell chemistry based on NMC - Nickel Manganese Cobalt Oxide - and NCA - Lithium Nickel Cobalt Aluminium Oxide - are high energy density batteries. Typically, batteries with a cell chemistry based on LFP - Lithium Iron Phosphate - and LTO - Lithium Titanate - are high power density batteries.

The graph clearly shows that an ideal combination of high specific power and high specific energy is not existing. Or in other words, the higher right corner of the graph is empty. In an advantageously embodiment of the invention, the removable battery is of a chemistry having high specific energy and/or the fixed battery pack is of a chemistry having high specific power. This embodiment enhances the performance of the battery system and/or optimizing lifetime or a balance between the two. Thus, this embodiment, due to the combination of buffering charge in the fixed battery pack and providing high energy density in the removable battery pack or packs, places the battery system for temporal peak currents in the higher right corner of the graph. Another viewpoint may be that while the battery system may have a relatively high capacity due to the high energy density of the removable battery packs, the system at the same time is capable of providing a high power. A further advantage may be that the battery system uses less space in the electrical vehicle, while providing high power. A further advantage may be that the battery system optimizes the balance between weight and performance of the battery system. A further advantage may be that the battery system optimizes the balance between weight of and energy provided by the battery system.

Figure 3 schematically shows a removable battery pack and a first embodiment of directional switches 400. The removable battery pack may comprise the directional switches 420, 440. This provides the advantage that the terminals of the removable battery pack are electrically isolated from the battery, such that the removable battery pack may be handled with higher safety as the terminals are not providing a potential difference or voltage. Additionally, this provides the advantage that the charging and discharging function of the removable battery pack can be activated and de-activated separately. In this case, the positive and negative terminals of the removable battery pack are respectively the first connector 401 and the third connector 403.

Alternatively, the directional switches may be placed outside the removable battery pack, but be part of the battery system, preferably be part of the battery bay. This provides the advantage that the removable battery pack may be a standard removable battery pack, without specific adaptations for this battery system. Furthermore, the battery bay may advantageously be shaped to receive a standard shaped rechargeable battery. In this case, the positive and negative terminals of the removable battery pack are respectively the first connector 401 and the second connector 402.

The removable battery pack typically comprises a stack of battery cells 410. The stack of battery cells comprises multiple battery cells 411 coupled in series for adding the respective voltages generated by the battery cells and forming a stack.

In this first embodiment, the directional switches are identical and are arranged functionally in a mirrored position. This functionally mirrored position may be interpreted in respect to electrical function and in the schematic electrical circuit. The mirrored position doesn't have to mean that the components are physically arranged in a mirrored position.

The first directional switch is a directional discharge switch 420. The directional discharge switch comprises a source port 426, a drain port 427 and a gate port 428. The main current may run between the source port and the drain port. If the current runs from the drain port through the directional discharge switch to the source port, the current is a discharge current. If the current runs from the source port through the directional discharge switch to the drain port, the current is a charge current. The gate port controls if a discharge current is allowed to run between the drain port through the directional discharge switch to the source port. In the opposite direction, a charge current may still run through the directional discharge switch if the gate port prohibits a discharge current.

Internally, this first embodiment of a directional discharge switch comprises a discharge MOSFET 425 and optionally a discharge bypass diode 430. The MOSFET comprises a gate electrically connected to the gate port, a source electrically connected to the source port and a drain electrically connected to the drain port. The discharge MOSFET is advantageously an enhancement MOSFET. The enhancement MOSFET provides the effect that if no potential difference is applied between the gate-source of the discharge MOSFET, the source-drain of the discharge MOSFET exhibits a high resistance advantageously preventing a discharge current to flow.

The discharge MOSFET has a substrate electrically coupled to the source of the discharge MOSFET. Even when the source-drain of the discharge MOSFET exhibits a high impedance, a charge current may flow through the discharge MOSFET via substrate-drain junction. Thus, the discharge MOSFET acts as a directional switch, wherein discharge current is controlled by the gate port, while the charge current may pass through the MOSFET either via the source-drain or via the substrate-drain junction.

Furthermore, as the substrate-drain junction may not be suitable for conducting high currents and/or for a longer period of time, the discharge bypass diode may conduct the major part of a charge current when the discharge MOSFET exhibits a high impedance over its source-drain. This discharge bypass diode has an anode and a cathode. The anode is connected to the source of the discharge MOSFET. The cathode is connected to the drain of the discharge MOSFET. The discharge bypass diode provides the effect of allowing larger charge currents to flow, while the discharge MOSFET is switched off. Thus, the discharge bypass diode prevents destructive charge currents to flow in the discharge MOSFET.

The second directional switch is a directional charge switch 440. The directional charge switch comprises a source port 446, a drain port 447 and a gate port 448. The main current may run between the source port and the drain port. If the current runs from the drain port through the directional charge switch to the source port, the current is a charge current. If the current runs from the source port through the directional charge switch to the drain port, the current is a discharge current. The gate port controls if a charge current is allowed to run between the drain port through the directional charge switch to the source port. In the opposite direction, a discharge current may still run through the directional charge switch if the gate port prohibits a charge current.

Internally, this first embodiment of a directional charge switch comprises a charge MOSFET 445 and optionally a charge bypass diode 450. The MOSFET comprises a gate electrically connected to the gate port, a source electrically connected to the source port and a drain electrically connected to the drain port. The charge MOSFET is advantageously an enhancement MOSFET. The enhancement MOSFET provides the effect that if no potential difference is applied between the gate-source of the charge MOSFET, the drain-source of the charge MOSFET exhibits a high resistance advantageously preventing a discharge current to flow.

The charge MOSFET has a substrate electrically coupled to the source of the charge MOSFET. Even when the drain-source of the charge MOSFET exhibits a high impedance, a discharge current may flow through the charge MOSFET via substrate-drain junction. Thus, the charge MOSFET acts as a directional switch, wherein charge current is controlled by the gate port, while the discharge current may pass through the MOSFET either via the drain-source or via the substrate-drain junction.

Furthermore, as the substrate-drain junction may not be suitable for conducting high currents and/or for a longer period of time, the charge bypass diode may conduct the major part of a discharge current when the charge MOSFET exhibits a high impedance over its drain-source. This charge bypass diode has an anode and a cathode. The anode is connected to the source of the charge MOSFET. The cathode is connected to the drain of the charge MOSFET. The charge bypass diode provides the effect of allowing larger discharge currents to flow, while the charge MOSFET is switched off. Thus, the charge bypass diode prevents destructive discharge currents to flow in the charge MOSFET.

The combination of directional switches in combination with a stack of battery cells provide the effect of separately controlling charging and discharging currents and/or electrically isolating the stack of battery cells. Thus, the first and third connector may safely be touched without causing an electrical shock and thus unsafe situations. The effect of the current combination is thus enhancing safety of the combination. A further effect may be that a stack of cells may be selectively used in or controlled by the battery system for example only for charging or discharging or for both. The system controller typically directly or indirectly controls the gate ports of the directional switches.

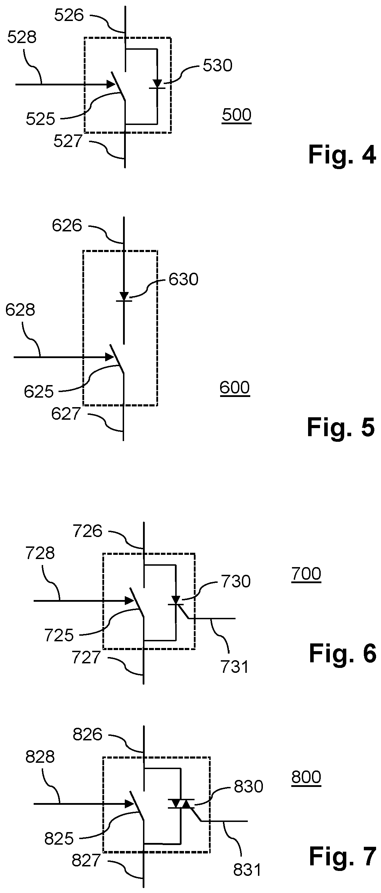

Figure 4 schematically shows a second embodiment 500 of a directional switch. The directional switch comprises a first port 526, a second port 527 and a control port 528. The main current may run between the first port and the second port. Depending on the orientation of the directional switch, the current running from the first port to the second port is a charge or a discharge current and vice versa. The control port controls if a current is allowed to run between the second port through the directional switch to the first port. In the opposite direction, a current may still run through the directional switch if the control port is switched off.

Internally, this second embodiment of a directional switch comprises a switching element 525 and optionally a bypass diode 530. The switching element may comprise a FET, such as a MOSFET or JFET. The switching element may comprise any other electrical element causing current to be switched on and off under the control of a control port. The switching element comprises a control terminal electrically connected to the control port, a first terminal electrically connected to the first port and a second terminal electrically connected to the second port. Typically, if the control port is uncontrolled or unpowered, the control port causes the switching element to be switched off. The unpowered switch off state provides the effect that if no control input is applied between to the control port, the switching element is switched off, preventing a current to flow through the switching element.

The bypass diode may conduct the major part or all of a current running or flowing from the first port to the second port when the switching element is switched off. This bypass diode has an anode and a cathode. The anode is connected to the first terminal of the switching element. The cathode is connected to the second terminal of the switching element. The bypass diode provides the effect of allowing larger charge currents to flow, while the switching element is switched off. Thus, the bypass diode allows current to only flow in one direction and prevents destructive currents to flow in the switching element.

The first and second embodiment of the directional switch provide the advantage that doesn't need to cross a junction in the directional switch. This has the technical effect of minimizing the energy loss in the directional switch. Minimizing energy loss results in less temperature rise in the directional switch, thus allowing miniaturization of the directional switch.

This directional switch is advantageously deployed together with a mirrored directional switch in series to control a stack of electrical cells.

Figure 5 schematically shows a third embodiment 600 of a directional switch. The directional switch comprises a first port 626, a second port 627 and a control port 628. The main current may run between the first port and the second port. Depending on the orientation of the directional switch, the current running from the first port to the second port is a charge or a discharge current. The control port controls if a current is allowed to run between the first port through the directional switch to the second port. In the opposite direction, a current is prohibited independent if the control port is switched off.

Internally, this third embodiment of a directional switch comprises a switching element 625 and a directional diode 630. The switching element may comprise a FET, such as a MOSFET or JFET. The switching element may comprise any other electrical element causing current to be switched on and off under the control of a control port. The directional diode has an anode and a cathode. The anode is connected to the first port. The cathode is connected to the first terminal of the switching element. The switching element comprises a control terminal electrically connected to the control port, a first terminal electrically connected to the cathode of the directional diode and a second terminal electrically connected to the second port. Typically, if the control port is uncontrolled or unpowered, the control port causes the switching element to be switched off. The unpowered switch off state provides the effect that if no control input is applied between to the control port, the switching element is switched off, preventing a current to flow through the switching element.

The directional diode conducts the all of the current running or flowing from the first port to the second port when the switching element is switched on. The directional diode provides the effect of only allowing currents to flow, while the switching element is switched on in the direction from the first port through the directional switch to the second port. Thus, the directional diode prevents destructive currents to flow in the switching element.

This directional switch is advantageously deployed together with a mirrored directional switch in parallel to control a stack of electrical cells.

Figure 6 schematically shows a fourth embodiment 700 of a directional switch. The directional switch comprises a first port 726, a second port 727, a first control port 728 and a second control port 731. The main current may run between the first port and the second port. Depending on the orientation of the directional switch, the current running from the first port to the second port is a charge or a discharge current and vice versa. The first and the second control ports control if a current is allowed to run between the second port through the directional switch to the first port. In the opposite direction, a current may still run through the directional switch if the first and the second control ports are switched off.

Internally, this fourth embodiment of a directional switch comprises a switching element 725 and a thyristor 730. The switching element may comprise a FET, such as a MOSFET or JFET. The switching element may comprise any other electrical element causing current to be switched on and off under the control of the first control port. The switching element comprises a control terminal electrically connected to the first control port, a first terminal electrically connected to the first port and a second terminal electrically connected to the second port. Typically, if the first control port is uncontrolled or unpowered, the first control port causes the switching element to be switched off. The unpowered switch off state provides the effect that if no control input is applied between to the first control port, the switching element is switched off, preventing a current to flow through the switching element.

The thyristor may conduct the major part or all of a current running or flowing from the first port to the second port when the switching element is switched off. This thyristor has an anode, a cathode and a gate. The anode is connected to the first terminal of the switching element. The cathode is connected to the second terminal of the switching element. The gate is connected to the second control port of the directional switch. The thyristor provides the effect of allowing larger charge currents to flow, while the switching element is switched off. Thus, the thyristor prevents destructive currents to flow in the switching element.

This directional switch may be operated slightly different from the first and second embodiment of the directional switch. The major amount of current either from the first port through the directional switch to the second port or vice versa, is typically flowing through the thyristor. The gate of the thyristor is controlled via the second control port. To allow current to flow two ways through the thyristor, the gate is activated. Typically, the switching element is only activated to switch from one mode to another mode inside the directional switch. The difference in control comes from switching from a conductive mode wherein current flows from the second port through the thyristor to the first port to a blocking mode wherein this flow of current is blocked. In this conductive mode the gate of the thyristor has to be at least activated once. And when the switch is now made from the conductive mode to the blocking mode, the thyristor has to be able to build its blocking barrier internally. The time for the thyristor for building up this barrier may be provided by temporarily closing the switching element parallel to the thyristor by temporarily activating the first control port.

This directional switch is advantageously deployed together with a mirrored directional switch in series to control a stack of electrical cells.

Figure 7 schematically shows a fifth embodiment 800 of integrated directional switches. The integrated directional switches comprise a first port 826, a second port 827, a first control port 828 and a second control port 831. The main current may run between the first port and the second port. Depending on the orientation of the directional switch, the current running from the first port to the second port is a charge or a discharge current and vice versa. The first and the second control ports control if a current is allowed to run between the second port through the directional switch to the first port and vice versa.

Internally, this fifth embodiment of integrated directional switches comprises a switching element 825 and a TRIAC 830. The switching element may comprise a FET, such as a MOSFET or JFET. The switching element may comprise any other electrical element causing current to be switched on and off under the control of the first control port. The switching element comprises a control terminal electrically connected to the first control port, a first terminal electrically connected to the first port and a second terminal electrically connected to the second port. Typically, if the first control port is uncontrolled or unpowered, the first control port causes the switching element to be switched off. The unpowered switch off state provides the effect that if no control input is applied between to the first control port, the switching element is switched off, preventing a current to flow through the switching element.

The TRIAC may conduct the major part or all of a current running or flowing from the first port to the second port or vice versa when the switching element is switched off. This TRIAC has a first anode, a second anode and a gate. The first anode is connected to the first terminal of the switching element. The second anode is connected to the second terminal of the switching element. The gate is connected to the second control port of the directional switch. The TRIAC provides the effect of allowing larger charge currents to flow, while the switching element is switched off. Thus, the TRIAC prevents destructive currents to flow in the switching element.

This directional switch may be operated slightly different from the first and second embodiment of the directional switch and more like the fourth embodiment of the directional switch. The major amount of current either from the first port through the directional switch to the second port or vice versa, is typically flowing through the TRIAC. The gate of the TRIAC is controlled via the second control port. To allow current to flow both ways through the TRIAC, the gate is activated. Typically, the switching element is only activated to switch from one mode to another mode inside the directional switch. The difference in control comes from switching from a conductive mode wherein current flows from the second port through the TRIAC to the first port or vice versa to a blocking mode wherein this flow of current is blocked. In this conductive mode the gate of the TRIAC has to be at least activated once. And when the switch is now made from the conductive mode to the blocking mode, the TRIAC has to be able to build its blocking barrier internally. The time for the TRIAC for building up this barrier may be provided by temporarily closing the switching element parallel to the TRIAC.

These integrated directional switches may advantageously be deployed to control a stack of electrical cells.

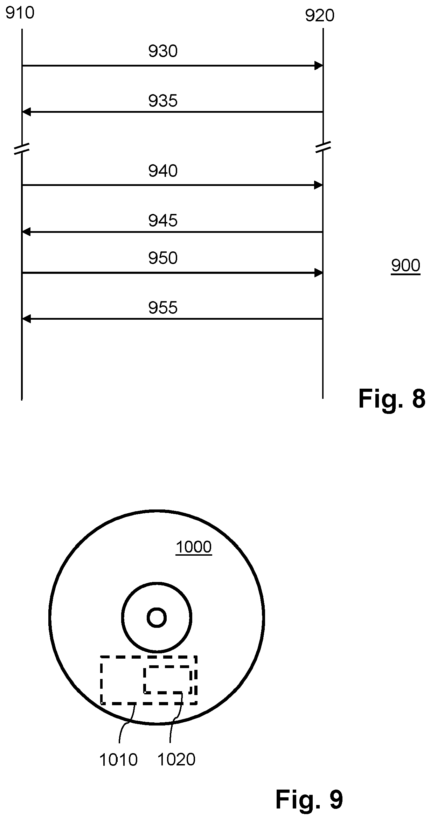

Figure 8 schematically shows a sequence diagram 900 for current transfer. This sequence diagram describes the typical sequence of messages between a first removable battery pack controller 910 and a second removable battery pack controller 920. In the sequence diagram time increases from top to down.

The first removable battery pack controller may be part of a first removable battery pack or may be part of the battery system, such as part of the system controller. The first removable battery pack controller is abbreviated to first controller for the description of this figure. The second removable battery pack controller may be part of a second removable battery pack or may be part of the battery system, such as part of the system controller. The second removable battery pack controller is abbreviated to second controller for the description of this figure.

In the start position, the first removable battery pack is active. Active means that the first removable battery pack is capable of receiving a charge current or providing a discharge current. Typically, the first removal battery pack has a discharge directional switch and a charge directional switch associated the first removable battery pack. Both these switches are switched on if the first removable battery pack is active.

In the start position, the second removable battery pack is inactive. Inactive means that the second removable battery pack is electrically isolated and thus incapable of receiving a charge current or providing a discharge current. Typically, the second removal battery pack has a discharge directional switch and a charge directional switch associated the second removable battery pack. Both these switches are switched off if the second removable battery pack is inactive.

Typically, a removable battery pack controller incorporates all the functionality as described for the first controller and the second controller for being able to place the removable battery pack in an active mode as well as in an inactive mode.

As soon as the first controller detects that the first removable battery pack reaches a threshold, such as a predefined threshold, the first controller may decide that the first removable battery pack should be made inactive. The threshold may be different depending on if the first removable battery pack is charging, discharging or not exchanging energy. The threshold is typically related to a state of charge of the first removable battery pack. The state of charge may be based on the terminal voltage of the stack of battery cells, the amount of charge present inside the stack of battery cells, the temperature of the stack of battery cells, the history of charge and discharge cycles of the stack of battery cells, the internal impedance of the removable battery pack and/or a combination of the preceding indicators.

In response to exceeding the threshold, the first controller may transmit one or more state request messages 930 to one or more other removable battery packs, wherein at least the message is transmitted to the second controller. Alternatively, the state request message may be part of regularly checking the presence and condition of the other removable battery packs without that a threshold is exceeded. The message may be transmitted as broadcast, groupcast or unicast. The state request message requests the receiving removable battery pack controller to indicate in a reply if the removable battery pack associated with the receiving removable battery pack controller is ready to become active. The second controller may in reaction transmit a state reply message 940. Optionally, the second controller may also stay silent if the second removable battery pack is not ready to become active, e.g. due to a too low state of charge. Alternatively, the second controller transmits the state reply message regularly for example triggered by a course of time without receiving a state request message. The state reply message comprises an indication if this removable battery pack is ready to become active. The transmission of the state reply message in itself may be the indication.

The state reply message may comprise the state of charge of this removable battery pack. The state reply message may comprise the terminal voltage of the removable battery pack.

Based on the different received state reply messages from several other removable battery pack controllers, the first controller may select the second controller for transferring the active mode from the first removable battery pack to the second removable battery pack. The selection is typically based on the received state reply messages.

After the exceeding of the threshold and the selection of another removable battery pack, labelling this removable battery pack as second removable battery pack, the first controller transmits a request current transfer message 940 to the second controller. The second controller for initiating the transfer of the active mode from the first removable battery pack to the second removable battery pack requires the terminal voltage of the first removable battery pack. The terminal voltage of the first removable battery pack is compared with the terminal voltage of the second removable battery pack to determine which directional switch is to be switched first. The terminal voltage of the first removable batter pack may be communicated to the second controller as part of the state request message, the request current transfer message or a separate message from the first controller to the second controller.

The second controller thereafter executes the step of, if the terminal voltage of the second removable battery pack is higher than the terminal voltage of the first removable battery pack, switching on the directional charge switch associated with the second removable battery pack and otherwise switching on the directional discharge switch associated with the second removable battery pack.

After completing the switching step, the second controller executes the step of transmitting a reply current transfer message 945. The message may comprise the terminal voltage of the second removable battery pack.

After the transmission of the reply current transfer message by the second controller, the first controller may execute the step of receiving the reply current transfer message 945 from the second controller.

The first controller may thereafter execute the step of comparing the terminal voltage of the first removable battery pack voltage indicator and the terminal voltage of the second removable battery pack voltage indicator.

The first controller may thereafter execute the step of, if the terminal voltage of the first removable battery pack is positive, or the terminal voltage of the first removable battery pack is higher than the terminal voltage of the second removable battery pack, switching off the directional discharge switch associated with the first removable batter pack and otherwise switching off the directional charge switch associated with the first removable battery pack.

The first controller may thereafter execute the step of transmitting a ready current transfer message 950 to the second controller.

After the transmission of the ready current transfer message by the first controller, the second controller may execute the step of receiving the ready current transfer message.

The second controller may thereafter execute the step of switching on any of the directional switches associated with the second removable battery pack which were off and thereafter transmitting the acknowledge current transfer message 955.

After the transmission of the acknowledge current transfer message by the second controller, the first controller may execute the step of receiving the acknowledge current transfer message, and thereafter switching off any of the directional switches associated with the removable battery pack which were on.

The switching of the directional switches associated with the first and second removable battery pack in the sequence described above provides the advantage of switching between two removable battery packs with differing terminal voltages. Seamless switching means that switching may be done without a loss of power of power spike. This may be advantageous as for example a propulsion system may not cause a sudden change of propulsion power. Furthermore, this may be advantageous when the battery system is charged via a charger, as the charger or the external power supply supplying power to the charger may switch off during a power dip.

Figure 9 schematically shows an embodiment of a computer program product 1000, computer readable medium 1010 and/or non-transitory computer readable storage medium according to the invention. The computer program product and/or computer readable medium comprises the computer readable code 1020.

It should be noted that the figures are purely diagrammatic and not drawn to scale. In the figures, elements which correspond to elements already described may have the same reference numerals.

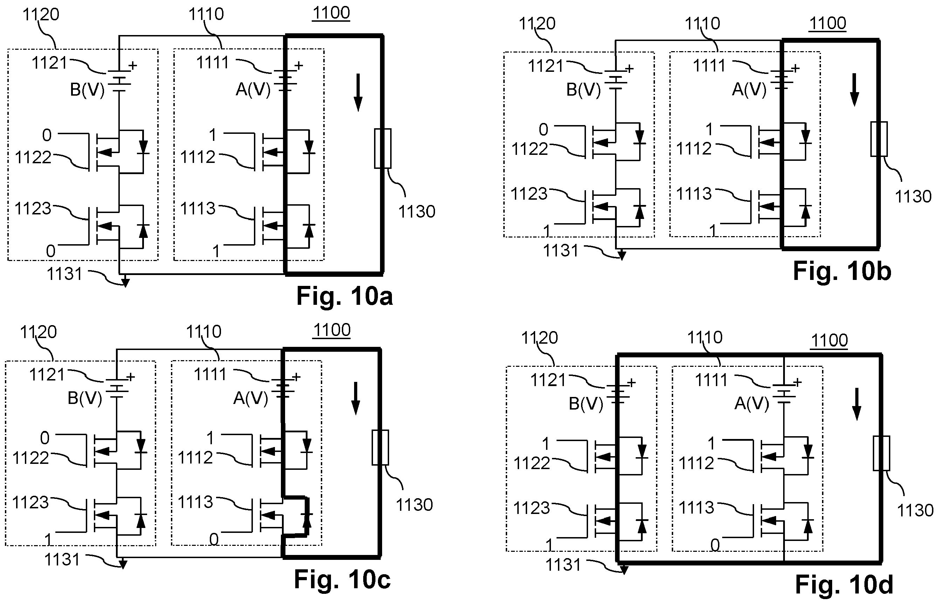

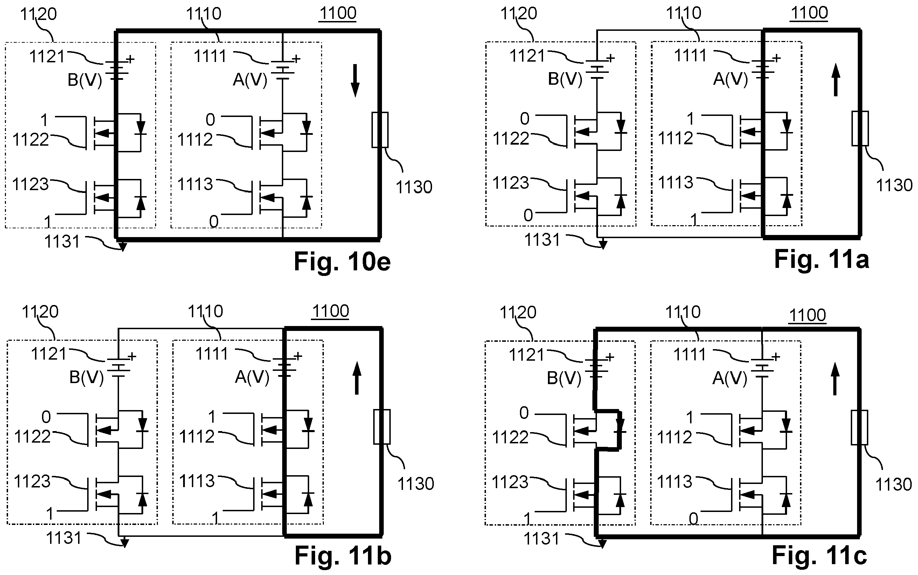

Figure 10, 11, 12, and 13 show an embodiment 1100 of a seamlessly switching battery packs, such as removeable battery packs. The embodiment comprises a first removeable battery pack 1110, a second removeable battery pack 1120, and a load 1130. All three elements of the embodiment are arranged in parallel to each other with the positive poles of the removeable battery packs conductively coupled to each other, and with the negative poles of the removeable battery packs conductively coupled also to each other. Further, it will be clear to the reader that purely for explanatory reasons two removeable battery packs are drawn, but multiple removeable battery packs may be arranged in parallel, wherein selection of the active removeable battery pack may be done according to the protocol described above. The flow direction of the current is indicated by an arrow next to the load, further the path of the current is indicated with a thick line. In another embodiment, an electrical adapter and a fixed battery pack may be arranged between the parallel coupled removeable battery packs and the load, similar to Figure 1.

The first removeable battery pack comprises a first battery 1111, a first discharge switch 1112, and a first charge switch 1113. The first discharge switch and the first charge switch are N-channel enhancement MOSFETS. All elements of the first removeable battery pack are arranged in series to each other. Further, the positive pole of the first removeable battery pack is conductively coupled to the positive pole of the battery. The negative pole of the battery is conductively coupled to the source of the first discharge switch. The drain of the first discharge switch is conductively coupled to the drain of the first charge switch. The source of the first charge switch is conductively coupled to the negative pole of the removeable battery pack. The control voltages are applied to the gate of the first discharge switch and the gate of the first charge switch. The control voltages are applied relative to a ground 1131 conductively coupled to the negative pole of the first removeable battery pack. The first battery provides a voltage A(V). The second removeable battery pack has comprises a second battery 1121, a second discharge switch 1122, and a second charge switch 1123. The internal arrangement of the second removeable battery is typically equal or similar to the internal arrangement of the first removeable battery pack. The second battery provides a voltage B(V).

Figure 10a to 10e show the sequence of switching the switches in the respective removeable battery packs to seamlessly switch a discharge current from the first removeable battery pack to the second removeable battery pack. In this scenario B(V)>A(V), e.g. B(V) = 58(V), and A(V) = 52(V). The discharge current is discharged via the load 1130. In figure 10a, the first charge switch and the first discharge switch are switched on, or conductive between drain and source or vice versa. This may already be the situation over a longer period of time, such as during typical or regular operation. The on switching is typically via a positive voltage on the gates of the switches, typically above the gate source threshold voltage. This positive voltage is indicated as 1 in the figures. In figure 10a, the second charge switch and the second charge switch are switched off, or non-conductive between drain and a source or vice versa. The off switching is typically via a zero voltage on the gates of the switches, typically below the gate source threshold voltage. The signal voltages are relative to the ground. The discharge current is provided by the first removeable battery pack, more specific the first battery, to the load. The second removeable batter pack is electrically isolated from the other electrical components in the schematic.

In figure 10b, the second charge switch is switched on. This does not affect the conductive path of the discharge current. In figure 10c, the first charge switch is switched off. Although the discharge current is still provided by the first removeable battery pack, the conductive path is now using the diode over the drain-source of the first charge switch. This diode may be a separate diode. This diode may also be the drain substrate junction inside the N-channel enhancement MOSFET. Although this junction may be considered as parasitic, and when used for longer periods of time may cause irreversible damage to the MOSFET, the junction may shortly conduct the discharge current without irreversible damage.

In figure 10d, the second discharge switch is switched on. The affect is that the conductive path of the discharge current is changed from the first removeable battery pack to the second removeable battery pack. The conductive path uses the regular conductive paths between drain and source of the second discharge switch as well as the second charge switch. In figure 10e, the first discharge switch is switched off. This does not affect the conductive path of the discharge current. As both switches are switched off from the first removeable battery pack, the first removeable battery pack is electrically isolated from the other electrical components in the schematic, and can thus be safely removed without causing hazardous situations.

Figure 11a to 11e show the sequence of switching the switches in the respective removeable battery packs to seamlessly switch a charge current from the first removeable battery pack to the second removeable battery pack. In this scenario B(V)>A(V). The charge current may be provided by a load, which may be a regenerative motor of e.g. an electrical vehicle. Alternatively, the charge current may be provided by an external source for selectively charging the first or second removeable battery pack. Selectively charging provides the advantage that in case not both removeable battery packs are fully charged by the external source, replacing the not fully charged or even depleted removeable battery pack allows for an alternative and quick way of charging the battery system. In figure 11a, the first charge switch and the first discharge switch are switched on. In figure 11a, the second charge switch and the second charge switch are switched off. The second removeable batter pack is electrically isolated from the other electrical components in the schematic.

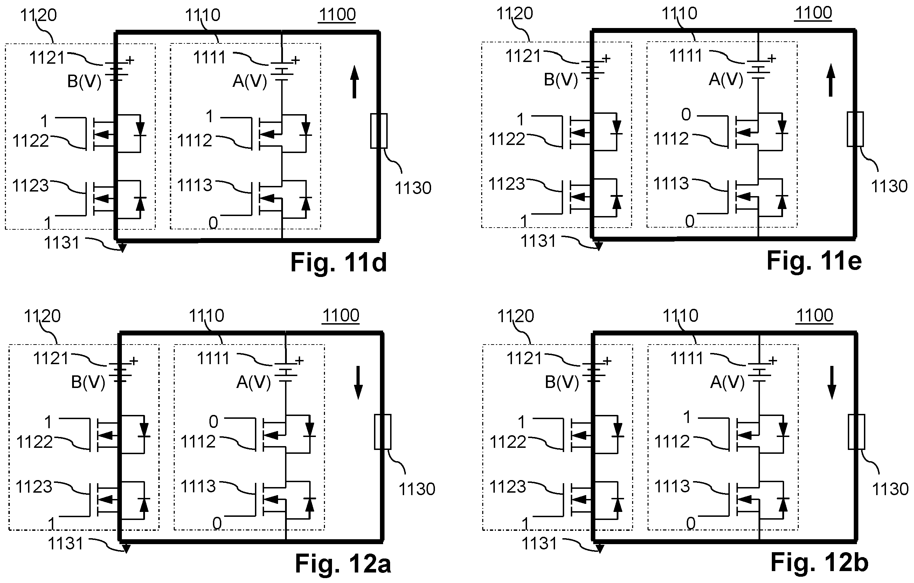

In figure 11b, the second charge switch is switched on. This does not affect the conductive path of the charge current. In figure 11c, the first charge switch is switched off. The affect is that the conductive path of the charge current is changed from the first removeable battery pack to the second removeable battery pack. The conductive path is now using the diode over the drain-source of the second discharge switch. In figure 11d, the second discharge switch is switched on. The affect is that the conductive path uses the regular conductive paths between drain and source of the second discharge switch as well as the second charge switch. In figure 11e, the first discharge switch is switched off. This does not affect the conductive path of the charge current. As both switches are switched off from the first removeable battery pack, the first removeable battery pack is electrically isolated from the other electrical components in the schematic.

Figure 12a to 12e show the sequence of switching the switches in the respective removeable battery packs to seamlessly switch a discharge current from the second removeable battery pack to the first removeable battery pack. In this scenario B(V)>A(V). In figure 12a, the second charge switch and the second discharge switch are switched on. In figure 12a, the first charge switch and the first charge switch are switched off. The first removeable batter pack is electrically isolated from the other electrical components in the schematic.

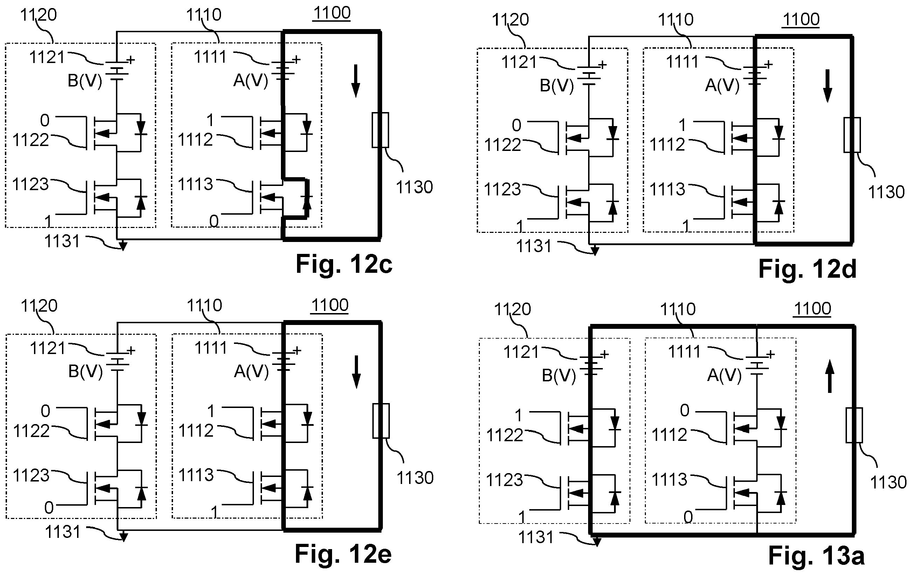

In figure 12b, the first discharge switch is switched on. This does not affect the conductive path of the discharge current. In figure 12c, the second discharge switch is switched off. The affect is that the conductive path of the discharge current is changed from the second removeable battery pack to the first removeable battery pack. The conductive path is now using the diode over the drain-source of the first charge switch. In figure 12d, the first charge switch is switched on. The affect is that the conductive path uses the regular conductive paths between drain and source of the first discharge switch as well as the first charge switch. In figure 12e, the second charge switch is switched off. This does not affect the conductive path of the discharge current. As both switches are switched off from the second removeable battery pack, the second removeable battery pack is electrically isolated from the other electrical components in the schematic.

Figure 13a to 13e show the sequence of switching the switches in the respective removeable battery packs to seamlessly switch a charge current from the second removeable battery pack to the first removeable battery pack. In this scenario B(V)>A(V). In figure 13a, the second charge switch and the second discharge switch are switched on. In figure 13a, the first charge switch and the first charge switch are switched off. The first removeable batter pack is electrically isolated from the other electrical components in the schematic.

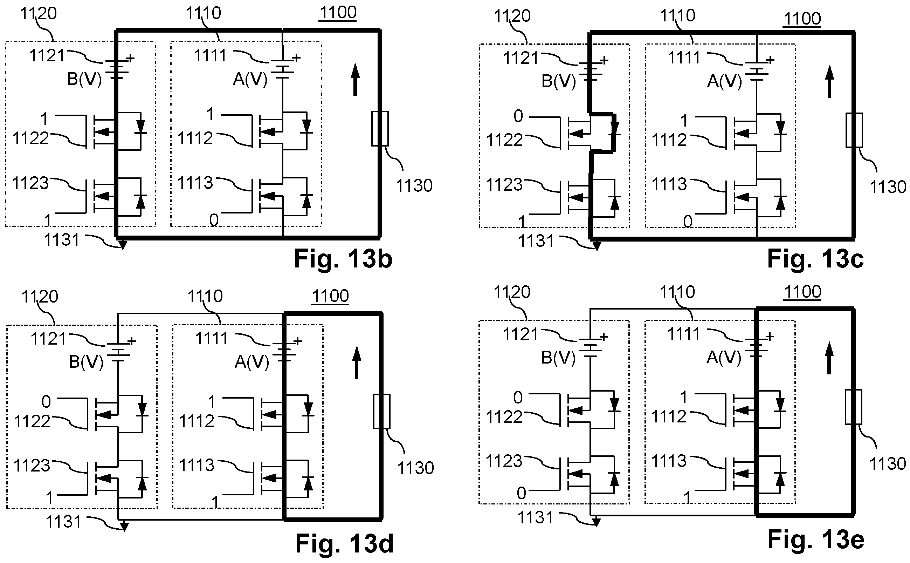

In figure 13b, the first discharge switch is switched on. This does not affect the conductive path of the charge current. In figure 13c, the second discharge switch is switched off. The conductive path is now using the diode over the drain-source of the second discharge switch. In figure 13d, the first charge switch is switched on. The affect is that the conductive path of the charge current is changed from the second removeable battery pack to the first removeable battery pack. In figure 13e, the second charge switch is switched off. This does not affect the conductive path of the charge current. As both switches are switched off from the second removeable battery pack, the second removeable battery pack is electrically isolated from the other electrical components in the schematic.

According to another embodiment of the invention, a battery system for electrically coupling to an electrically active element, comprising in parallel:
a first battery pack comprising in series:
   - a first battery pack;
   - a first directional discharge switch; and
   - a first directional charge switch;
a second batter pack comprising in series:
   - a second battery pack;
   - a second directional discharge switch; and
   - a second directional charge switch; and
a controller for controlling the switches;
wherein the electrically active element is couplable in parallel to the first and second battery packs for drawing a discharge current from the battery system and/or for providing a charge current to the battery system; and wherein the controller is arranged for seamlessly switching the charge and discharge currents from a first battery pack to the second battery pack and vice versa. In an embodiment, the electrically active element is an electrical motor, such as a propulsion system of an electrical vehicle. In a preferred embodiment, the first battery pack and the second battery pack are a first removeable battery pack and a second removeable battery pack, respectively. In an embodiment, the controller is distributed, wherein part of the controller is comprised in the first battery pack and another part is comprised in the second battery pack. In a further embodiment, the parts of the controller communicate according to the communication scheme as specified in Figure 8. In an embodiment, the seamless switching is combined with any of the other embodiments comprising a fixed battery and electrical adapter for providing additional advantageous.

A load according to the Figures 10-13 may be an electrically active element, such as an electrical motor, such as a propulsion system. The electrically active element may be a load when drawing a discharge current from the battery system. The electrically active element may be a current provider, such as behaving like a current source, it is a regenerating electrical motor, or an externally powered electrical charger.

It will be appreciated that the invention also applies to computer programs, particularly computer programs on or in a carrier, adapted to put the invention into practice. The program may be in the form of a source code, an object code, a code intermediate source and an object code such as in a partially compiled form, or in any other form suitable for use in the implementation of the method according to the invention. It will also be appreciated that such a program may have many different architectural designs. For example, a program code implementing the functionality of the method or system according to the invention may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other. An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

Examples, embodiments or optional features, whether indicated as non-limiting or not, are not to be understood as limiting the invention as claimed.

## Claims

1. Battery system (100) for electrically powering a propulsion system of an electrical vehicle, comprising:
- a fixed battery pack (110) arranged for electrically powering a propulsion system of an electrical vehicle, and comprising a set of terminals (111, 112) for electrically connecting the fixed battery pack;
- a removable battery pack comprising a set of terminals (121, 122, 131, 132) for electrically connecting the removable battery pack, preferably wherein the removable battery pack is a portable battery pack;
- a battery bay (120, 130) having an electrical connector for receiving and connecting to the removable battery pack;
- an electrical adapter (140) arranged for electrically connecting the removable battery pack and the fixed battery pack via the respective terminals; and
- a system controller (150) arranged for the steps of:
- obtaining (210) a fixed state indicator based on a state of charge of the fixed battery pack and/or a terminal voltage of the fixed battery pack;
- receiving (220) a presence indicator indicating presence of a removable battery pack in the battery bay;
- obtaining (230) a removable state indicator based on a state of charge of the removable battery pack and/or a terminal voltage of the removable battery pack;
- determining (240) if charge of the removable battery pack is to be provided to the fixed battery pack and/or the propulsion system based on the fixed state indicator and/or the removable state indicator; and
- controlling (250) the electrical adapter to transfer charge from the removable battery pack to the fixed battery pack and/or the propulsion system, wherein the current from the removable battery pack is lower than the peak current required for the propulsion system.

2. Battery system according to any of the preceding claims, wherein the fixed battery pack is arranged for providing high power to the propulsion system and/or wherein the battery bay is arranged for receiving the removable battery pack having a high energy density;
- preferably wherein the fixed battery pack has a first energy density and the battery bay is arranged for receiving the removable battery pack having a second energy density, wherein the first energy density is lower compared to the second energy density; and/or
- preferably wherein the fixed battery pack is capable of providing a fixed battery pack maximum power and the battery bay is arranged for receiving the removable battery pack capable of providing a removable battery pack maximum power, wherein the fixed battery pack maximum power is higher compared to the removable battery pack maximum power.

3. Battery system according to any of the preceding claims, comprising a fixed state unit arranged for determining the fixed state indicator, and wherein the step of obtaining the fixed state indicator comprises receiving the state indicator from the fixed state unit;
preferably wherein the fixed state unit is arranged for measuring the terminal voltage of the fixed battery pack and/or measuring the charge exchanged with the fixed battery pack;
wherein the fixed state unit optionally comprises a memory, wherein the fixed state unit is arranged for:
- retrieving a previous fixed state indicator from the memory;
- calculating a current fixed state indicator based on the previous fixed state indicator and the measurement.

4. Battery system according to any of the preceding claims, comprising a removable state unit arranged for determining the removable state indicator, and wherein the step of obtaining the removable state indicator comprises receiving the removable state indicator from the removable state unit; preferably wherein the removable state unit is arranged for measuring the terminal voltage of the removable battery pack and/or measuring the charge exchanged with the removable battery pack; wherein the removable state unit optionally comprises a memory, wherein the removable state unit is arranged for:
- retrieving a previous removable state indicator from the memory;
- calculating a current removable state indicator based on the previous removable state indicator and the measurement.

5. Battery system according to any of the preceding claims, comprising:
- a charger connector for connecting to an external charge supply;
- a charger arranged for electrically connecting the charger connector and the removable battery pack and/or the electrical adapter;
- a fixed temperature sensor arranged for sensing the temperature of the fixed battery pack;
- a fixed temperature control unit for controlling the temperature of the fixed battery pack; and
wherein the system controller is also arranged for the steps of:
- receiving an external charger presence indicator indicating presence of an external charge supply plugged into the connector;
- receiving a fixed temperature measurement from the fixed temperature sensor;
- if the fixed temperature measurement is outside the fixed charge temperature range, controlling the fixed temperature control unit for adjusting the fixed temperature towards the fixed charge temperature range; and
- if the fixed temperature measurement is inside the fixed charge temperature range, controlling charging the fixed battery pack via the charger and/or the electrical adapter;
wherein the system controller is also arranged for the steps of:
- receiving a removable temperature measurement from a removable temperature sensor arranged for sensing the temperature of the removable battery pack;
- if the removable temperature measurement is below the removable charge temperature range and inside the removable discharge temperature range, controlling the discharge of the removable battery pack into the fixed temperature control unit for adjusting the fixed temperature towards the fixed charge temperature range or if additionally the fixed temperature measurement is inside the fixed charge temperature range, controlling the discharge of the removable battery pack for charging the fixed battery pack; and
- if the removable temperature measurement is inside the removable charge temperature range, controlling charging the removable battery pack via the charger.

6. Battery system according to any of the preceding claims, comprising:
- a second battery bay having an electrical connector for receiving and connecting to a second removable battery pack comprising a set of terminals for electrically connecting the second removable battery pack;
wherein the electrical adapter is also arranged for electrically connecting the second removable battery pack to the removable battery pack and/or the fixed battery pack; and
wherein the system controller is also arranged for the steps of:
- receiving a second presence indicator indicating presence of a second removable battery pack in the second battery bay;
- obtaining a second removable state indicator based on a state of charge of the second removable battery pack and/or a terminal voltage of the second removable battery pack;
- determining if charge of the second removable battery pack is to be provided to the fixed battery pack, the propulsion system and/or the first removable battery pack based on the different state indicators of the different battery packs; and
- controlling the electrical adapter to transfer charge to or from the second removable battery pack;
preferably wherein the system controller is also arranged for the steps of:
- comparing the removable state indicator and the second removable state indicator;
- selecting the removable battery pack with the lowest value for the removable state indicator;
- determining if charge of the selected removable battery pack is to be provided to the fixed battery pack and/or the propulsion system also based on the comparison;
- controlling the electrical adapter to transfer charge from the selected removable battery pack to the fixed battery pack and/or the propulsion system.

7. Battery system according to the preceding claim, comprising:
- a directional charge switch arranged for switching a charge current of the removable battery pack;
- a directional discharge switch arranged for switching a discharge current of the removable battery pack;
- a second directional charge switch arranged for switching a charge current of the second removable battery pack; and
- a second directional discharge switch arranged for switching a discharge current of the second removable battery pack;
wherein the directional charge switch leaves the discharge current of the removable battery pack unrestrained;
wherein the directional discharge switch leaves the charge current of the removable battery pack unrestrained;
wherein the second directional charge switch leaves the discharge current of the second removable battery pack unrestrained; and
wherein the second directional discharge switch leaves the charge current of the second removable battery pack unrestrained;
preferably wherein the directional charge switch and the directional discharge switch are electrically coupled in series and/or parallel;
preferably wherein the second directional charge switch and the second directional discharge switch are electrically coupled in series and/or parallel; preferably wherein the directional charge switch and the directional discharge switch are identical in electrical circuit and are electrically coupled in mirrored positions; and/or
preferably wherein the second directional charge switch and the second directional discharge switch are identical in electrical circuit and are electrically coupled in mirrored positions.

8. Battery system according to the preceding claim, comprising:
- a removable battery pack controller for controlling the removable battery pack; and
- a second removable battery pack controller for controlling the second removable battery pack;
wherein the removable battery pack controller and the second removable battery pack controller are arranged for the step of communicating with each other for switching a current from the removable battery pack to the second removable battery pack;
preferably wherein the step of communicating of the removable battery pack controller comprises the steps of:
- obtaining a present state indicator based on a present state of charge of the removable battery pack and/or the removable battery pack voltage;
- comparing the present state indicator with a state threshold;
- selecting one other removable battery pack from the at least one other removeable battery pack based on state indicators of the at least one other removeable battery pack;
- if the present state indicator exceeds the state threshold, transmitting a request current transfer message to the selected one other removeable battery pack for switching the current to the selected one other removeable battery pack; and
- receiving an acknowledge current transfer message from the selected one other removeable battery pack; and/or
wherein the step of communicating of the second removable battery pack controller comprises the steps of:
- receiving a state request for providing a state indicator;
- obtaining a second present state indicator based on a present state of charge of the second removable battery pack and/orthe second removable battery pack voltage; and
- transmitting a state reply comprising a reply indicator based on the state indicator to the removable battery controller;
more preferably wherein the step of comparing of the removable battery pack controller comprises the step of:
- determining if a charge current is present; and
wherein if a charge current is present, the state threshold is based on a maximum threshold and otherwise the state threshold is based on a minimum threshold; and/or
wherein the received state request by the second removable battery pack controller comprises a charge indicator indicating if the removable battery pack is charging or discharging, and
wherein the reply indicator is also based on a state maximum threshold if the charge indicator indicates that the other removable battery pack is charging and a state minimum threshold otherwise;
preferably wherein the step of selecting of the removable battery pack controller comprises the steps of:
- retrieving the state indicator and the state threshold of at least one other removable battery pack, preferably all, from the at least one other removable battery pack; and
- selecting another removable battery pack based on a difference between the retrieved state indicator and the retrieved state threshold.

9. Battery system according to the preceding claim, wherein the step of communicating of the second removable battery pack controller comprises the steps of:
- receiving a request current transfer message;
- switching the second removable battery pack in a state for receiving the current; and
- transmitting an acknowledge current transfer message.

10. Battery system according to any of the preceding claims 8-9, wherein the step of transmitting of the removable battery pack controller comprises the step of determining a removable battery pack voltage indicator based on the removable battery pack voltage, and wherein the request current transfer message comprises the removable battery pack voltage indicator;
preferably wherein the step of communicating of the removable battery pack controller also comprises the steps of:
- after transmitting the request current transfer message, receiving a reply current transfer message from the selected one other removable battery pack, wherein the message comprises another removable battery pack voltage indicator based on the removable battery pack voltage of the selected one other removable battery pack;
- comparing the removable battery pack voltage indicator and the other removable battery pack voltage indicator; and
- if the removable battery pack voltage indicator is positive, or the removable battery pack voltage indicator is higher than the other removable battery pack voltage indicator, switching off the directional discharge switch associated with the removable batter pack and otherwise switching off the directional charge switch associated with the removable battery pack; and
- after completing the switching step, transmitting a ready current transfer message; and/or
when also depending on claim 9, wherein the step of receiving of the second removable battery pack controller comprises the steps of:
- determining a battery voltage indicator based on the battery voltage; and
- retrieving another battery voltage indicator from the other removeable battery pack from the received request current transfer message; and
wherein the step of switching comprises the steps of:
- if the battery voltage indicator is higher than the other battery voltage indicator, switching on the directional charge switch associated with the second removable battery pack and otherwise switching on the directional discharge switch associated with the second removable battery pack; and
- after completing the switching step, transmitting a reply current transfer message, wherein the message comprises an indicator based on the battery voltage indicator;
preferably wherein the removable battery pack controller is also arranged for the step of:
- after receiving the acknowledge current transfer message, switching off any of the directional switches associated with the removable battery pack which were on; and/or
wherein the step of switching on the second removable battery pack controller comprises the steps of:
- receiving the ready current transfer message;
- after receiving the ready current transfer message, switching on any of the directional switches associated with the second removable battery pack which were off and thereafter transmitting the acknowledge current transfer message.

11. Electrical vehicle (10) comprising:
- a propulsion system for propelling the electrical vehicle; and
- a battery system according to any of the preceding claims for electrically powering the propulsion system.

12. Method for a battery system (100) for an electrical vehicle (10), comprising the steps of:
- electrically powering a propulsion system of an electrical vehicle via a set of terminals of a fixed battery pack;
- receiving and connecting to a removable battery pack comprising a set of terminals for electrically connecting the removable battery pack in a battery bay;
- electrically connecting via an electrical adapter the removable battery pack and the fixed battery pack via the respective terminals;
- obtaining a fixed state indicator based on a state of charge of the fixed battery pack and/or a terminal voltage of the fixed battery pack;
- receiving a presence indicator indicating presence of a removable battery pack in the battery bay;
- obtaining a removable state indicator based on a state of charge of the removable battery pack and/or a terminal voltage of the removable battery pack;
- determining if charge of the removable battery pack is to be provided to the fixed battery pack and/or the propulsion system based on the fixed state indicator and/or the removable state indicator; and
- controlling the electrical adapter to transfer charge from the removable battery pack to the fixed battery pack and/or the propulsion system, wherein the current from the removable battery pack is lower than the peak current required for the propulsion system.

13. Method for a battery system according to the preceding claim,
wherein the method comprises the steps of:
- providing a removable battery pack comprising a set of terminals for electrically connecting the removable battery pack;
- providing a second removable battery pack comprising a set of terminals for electrically connecting the second removable battery pack;
- obtaining a removable state indicator based on a state of charge of the removable battery pack and/or the terminal voltage of the removable battery pack;
- comparing the removable state indicator with a state threshold from the removable battery pack;
- obtaining a second removable state indicator based on a second removable battery pack state of charge of the second removable battery pack and/or the second terminal voltage of the second removable battery pack;
- comparing the second removable state indicator with a second state threshold from the second removable battery pack;
- if the first state indicator exceeds the first state threshold and the second state indicator does not exceed the second state threshold, switching the current from the first removeable battery pack to the second removeable battery pack.

14. Method for a system controller of a battery system according to any of the claims 1-10, wherein the system controller is arranged for the steps of:
- obtaining a fixed state indicator based on a state of charge of the fixed battery pack and/or a terminal voltage of the fixed battery pack;
- receiving a presence indicator indicating presence of a removable battery pack in the battery bay;
- obtaining a removable state indicator based on a state of charge of the removable battery pack and/or a terminal voltage of the removable battery pack;
- determining if charge of the removable battery pack is to be provided to the fixed battery pack and/or the propulsion system based on the fixed state indicator and/or the removable state indicator; and
- controlling the electrical adapter to transfer charge from the removable battery pack to the fixed battery pack and/or the propulsion system, wherein the current from the removable battery pack is lower than the peak current required for the propulsion system.

15. Computer program product (1000) comprising a computer readable medium (1010) having computer readable code (1020) embodied therein, the computer readable code being configured such that, on execution by a suitable computer or processor, the computer or processor is caused to perform the steps of the method of any of the claims 12-14.
